# EUROPEAN PATENT APPLICATION

(11) **EP 2 921 633 A1**
(43) Date of publication of application: **23.09.2015**
(21) Application number: 13854620.5
(22) Date of filing: 10.10.2013
(51) Int. Cl.: E06B 5/00, E02B 7/44, E04H 9/14

(54) **WATER BARRIER PANEL DEVICE**

(30) Priority: 13.11.2012 JP 2012249715; 13.11.2012 JP 2012249716; 13.11.2012 JP 2012249718; 13.11.2012 JP 2012249719; 23.05.2013 JP 2013109253
(71) Applicant: Lixil Suzuki Shutter Corporation, Tokyo 170-0005 (JP)
(72) Inventor: FUKAGAWA, Daiki, Tokyo 170-0005 (JP); OBA, Atsushi, Tokyo 170-0005 (JP); YOSHIDA, Yasuto, Tokyo 170-0005 (JP)
(74) Representative: Tischner, Oliver
(86) International application number: PCT/JP2013/077661
(87) International publication number: WO 2014/077064

(57) **Abstract**

Provided is a water barrier panel device which includes a control member controlling a water barrier panel. The water barrier panel device includes a water barrier panel which blocks passage of water, a water collection pit which is configured to permit inflow of water, a water collection bucket which is moved in a vertical direction based on an amount of accumulated water, an interlocking mechanism which interlocks the water barrier panel and the water collection bucket, and a control member which controls movement of the water barrier panel.

## Description

### TECHNICAL FIELD

The present invention relates to a water barrier panel device which is disposed at an entrance of a building or the like.

### BACKGROUND ART

When a road or the like is flooded by heavy rain, water enters a building, a parking lot, or the like located in the vicinity of the road, and thus, damage spreads. In this case, if it is possible to prevent water from entering an entrance of a building, an entrance of an underground parking lot, or the like, it is possible to prevent the damage from spreading. From the viewpoint of the above-described problem, there is provided a water barrier panel device which is installed at the entrance of the building or the like and can block passage of the water.

In the related art, various kinds of water barrier panel devices are suggested, and for example, a water barrier panel device is disclosed in Patent Document 1. In the water barrier panel device (flood prevention device) disclosed in Patent Document 1, a water collection bucket is disposed in a water collection pit which is a groove dug from a road surface, and a plate-shaped water barrier panel (flood prevention plate) is provided in an accommodation pit, which is a groove dug at a position different from the road surface, so as to be retractable with respect to the accommodation pit. The water collection bucket and the water barrier panel are connected to each other by a lifting chain and a sprocket, and under normal conditions, the water barrier panel is stored inside the accommodation pit, the weight of the water barrier panel is set so as to be slightly heavier than that of the water collection bucket, and thus, the upper end of the water barrier panel is balanced so as to be flush with the road surface. Meanwhile, water is collected in the water collection bucket by heavy rain, the collection bucket is lowered due to the collection bucket being heavier than the water barrier panel by the weight of the stored water, and thus, the water barrier panel is pulled by the water collection bucket so as to be lifted. The water barrier panel protrudes from the road surface to block at least a part of the entrance by the lifting of the water barrier panel, and thus, further entry of water is prevented.

### PRIOR ART DOCUMENTS

### PATENT DOCUMENTS

[Patent Document 1] Japanese Patent Publication No. 4644734

### SUMMARY OF INVENTION

### PROBLEMS TO BE SOLVED BY THE INVENTION

In the water barrier panel device disclosed in Patent Document 1, there is an advantage in that the water barrier panel is automatically lifted by the water stored in the water collection bucket. The water barrier panel is lifted and lowered according to the amount of stored water in the water collection bucket. Accordingly, a problem or inconvenience with respect to a passing person or an emergency vehicle may occur.

Therefore, the present invention is made in consideration of the above-described problems, and an object thereof is to provide a water barrier panel device which includes a control member controlling the water barrier panel.

### MEANS FOR SOLVING THE PROBLEMS

Hereinafter, the present invention will be described.

According to an aspect of the present invention, there is provided a water barrier panel device, including: a water barrier panel which blocks passage of water, a water collection pit which is configured to permit inflow of water, a water collection bucket which is moved in a vertical direction based on an amount of accumulated water, an interlocking mechanism which interlocks the water barrier panel and the water collection bucket, and a control member which controls a movement of the water barrier panel.

The control member may include an opening which is provided in the water collection bucket.

The control member may include a plurality of openings which are provided in the water collection bucket, and the openings may be disposed so as to be separated from each other.

The control member may include: a seal member which comes into contact with at least a portion of the water barrier panel at a position at which the water barrier panel is lifted, a pressing member, and a receiving member corresponding to the pressing member, in which an inclined surface which is inclined in a movement direction of the water barrier panel may be provided in at least one of the pressing member and the receiving member, and the inclined surface may move the water barrier panel in a direction intersecting the movement direction to press the water barrier panel against the seal member.

A driven roller may be provided at a position corresponding to the inclined surface of the pressing member and the receiving member, and the driven roller may come into contact with the inclined surface.

The aspect of the present invention may further include a water intake groove, and a water introducing member which drains water when the water level of the water intake groove is lower than a predetermined level, in which the water introducing member may introduce the water from the water intake groove to the water collection pit when the water level of the water intake groove is equal to or more than a predetermined level.

The aspect of the present invention may further include a drain member which drains water stored in the water collection pit.

The control member may include a water flow sensor which measures an amount of water flowing into the water collection pit, in which the flow sensor may include: a flap which is disposed in the water introducing member and is movable according to the flow rate of the water introducing member, and a detection member which detects the position of the flap.

The control member may include a notification portion which notifies lifting of the water barrier panel based on a detection result of the water flow sensor.

The control member may include an obstacle sensor which detects whether or not there is an obstacle with respect to the movement of the water barrier panel, and may regulate the movement of the water barrier panel based on a detection result of the obstacle sensor.

In the aspect of the present invention, when the obstacle is no longer detected after the obstacle sensor detects the obstacle, the control member may release regulation of the movement of the water barrier panel.

The obstacle sensor may include an outside detection sensor which is provided on the exterior side of the water barrier panel, and an inside detection sensor which is provided on the interior side of the water barrier panel, in which the control member may determine that there is an obstacle when at least one of the outside detection sensor and the inside detection sensor detects an object.

The control member may include a water flow sensor which measures an amount of water which flows into the water collection pit, in which the control member may operate the obstacle sensor based on detection information of the water flow sensor, and may control the barrier panel by a detection signal of the obstacle sensor.

The control member may include a water barrier panel speed-reduction mechanism which regulates the lifting speed of the water barrier panel.

The aspect of the present invention may include a chain which connects the water barrier panel and the water collection bucket, and a speed-reduction sprocket which engages with the chain and is rotated, in which the chain is switchable to be engaged with and detached from the speed-reduction sprocket.

### EFFECTS OF THE INVENTION

According to the present invention, it is possible to control a water barrier panel as needed. Accordingly, it is possible to prevent a problem or inconvenience due to lifting of a water barrier panel from occurring.

### BRIEF DESCRIPTION OF THE DRAWINGS

FIG. 1 is a perspective view of a passage in which a water barrier panel device 1 according to an aspect is installed, FIG. 1(a) shows a state where the passage is open, and FIG. 1(b) shows a state where a part of the passage is closed.
FIG. 2(a) is a front view of the water barrier panel device 1 when viewed from a direction indicated by IIa in FIG. 1, and FIG. 2(b) is a rear view of the water barrier panel device when viewed from a direction indicated by IIb in FIG. 1.
FIG. 3 is a cross-sectional view of an inside-outside direction of the passage taken along line III-III of FIG. 1(a).
FIG. 4 is a view showing a state in which the water barrier panel is lifted in the same view point as that of FIG. 3.
FIG. 5(a) is a view showing a second pushing member 24 when viewed from the same viewpoint as that of FIG. 3 in a state where only the pressing member 25 is focused, and FIG. 5(b) is a view showing a state where the pressing member 25 comes into contact with a receiving member 26 in the state in which the water barrier panel 20 is lifted similarly to FIG. 4.
FIG. 6 is a view when a second guide sprocket 36 and a control sprocket 41 are viewed from above.
FIG. 7 is a view when a water barrier panel control mechanism 40 is viewed from a passage outlet side.
FIG. 8(a) is a view showing a first state of the water barrier panel control mechanism 40 and FIG. 8(b) is a view showing a second state of the water barrier panel control mechanism 40.
FIG. 9 is a view when a water barrier panel speed-reduction mechanism 50 is viewed from the passage outlet side.
FIG. 10(a) is a view showing a first state of the water barrier panel speed-reduction mechanism 50, and FIG. 10(b) is a view showing a second state of the water barrier panel speed-reduction mechanism 50.
FIG. 11 (a) is a view showing a first state of a flow rate detection sensor 61, and FIG. 11 (b) is a view showing a second state of the flow rate detection sensor 61.
FIG. 12 is a view showing a structure of a brake mechanism 80.
FIG. 13 is another view showing the structure of the brake mechanism 80.
FIG. 14 is a view showing a state when water flows into the water barrier panel device 1.
FIG. 15 is a view showing a flow of an operation of a safety device portion 4.

### EMBODIMENTS FOR CARRYING OUT THE INVENTION

The above-described operations and advantages of the present invention are obvious from aspects of the present invention described as follows. Hereinafter, the present invention will be described based on the aspects shown in the drawings. However, the present invention is not limited to the aspects.

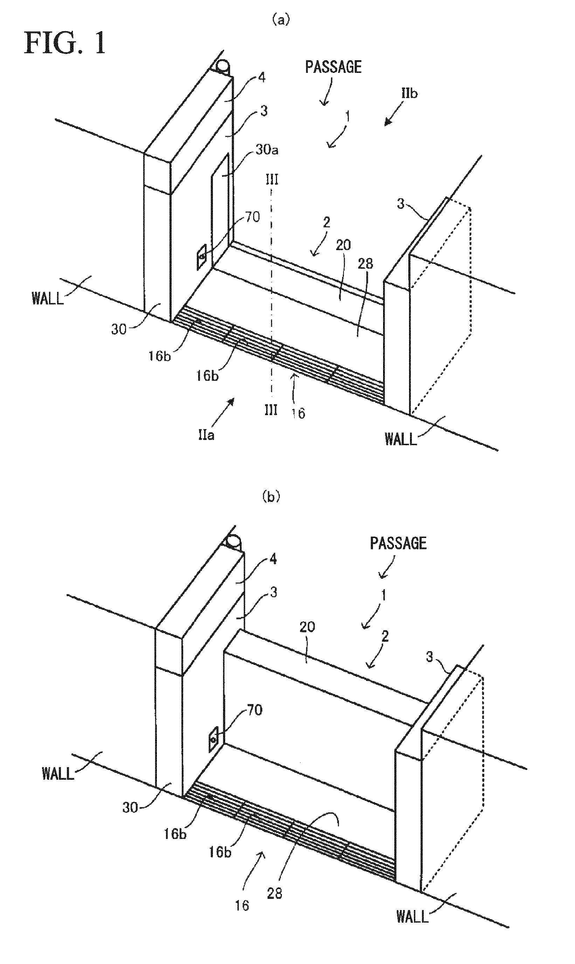

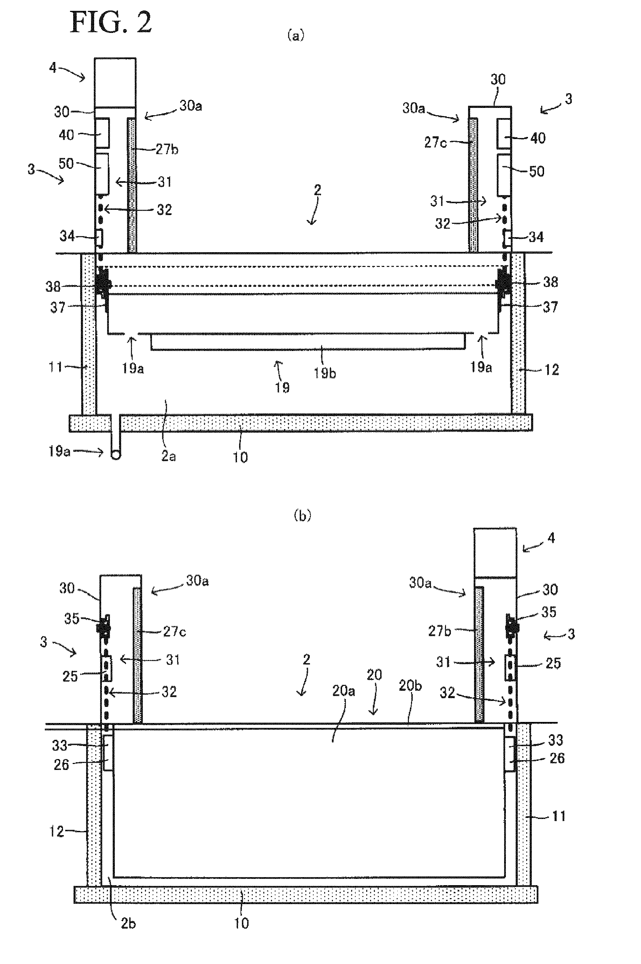

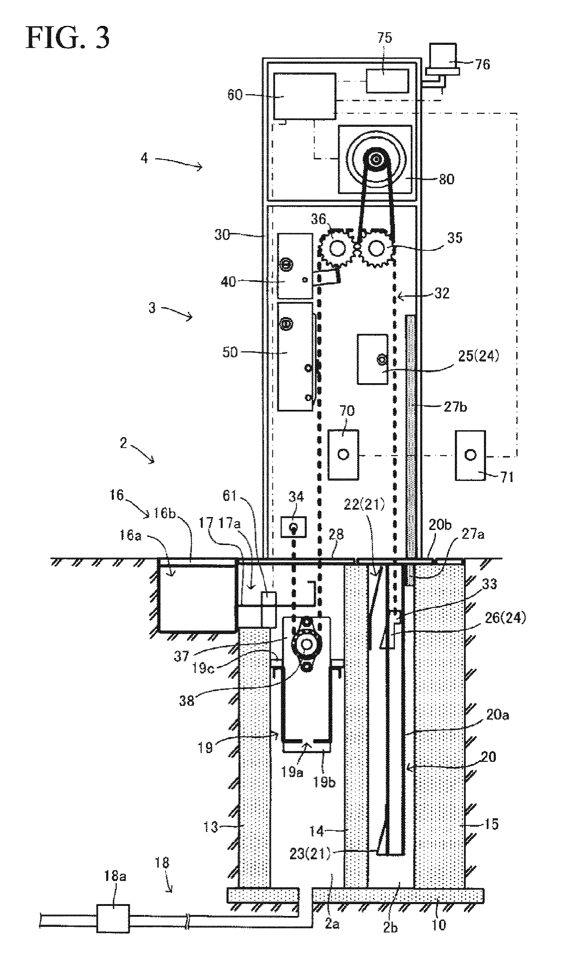

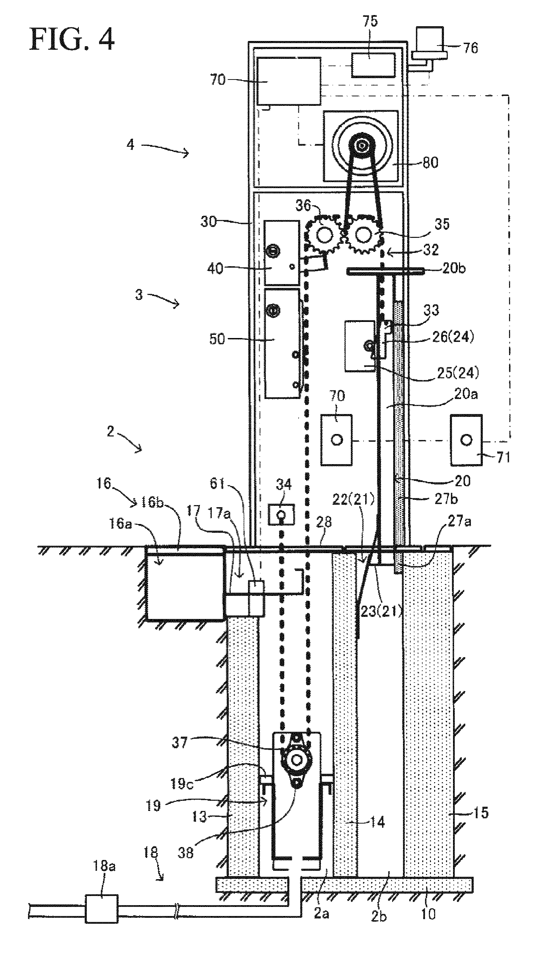

A water barrier panel device 1 will be described with reference to FIGS. 1 to 4 and each drawing which is appropriately indicated. In FIGS. 1 to 4 and each drawing referred to by the following descriptions for explanation, appropriate members are shown in a see-through manner. Moreover, for easy understanding of each drawing, some members may be omitted. In addition, in the present aspect, obliquely downward left sides on paper surfaces of FIGS. 1(a) and 1(b), and the left side on the paper surface of FIGS. 3 and 4 indicate exterior sides, and the opposite sides indicate interior sides. Accordingly, FIG. 2(a) is a view of the water barrier panel device 1 when viewed from the exterior side, and FIG. 2(b) is a view of the water barrier panel device 1 when viewed from the interior side. Here, during a flood, heavy rain, or the like, water enters a doorway of a building, an underground parking lot, or the like from the exterior side.

The water barrier panel device 1 includes a passage opening and closing portion 2, mechanism accommodating portions 3, and a safety device portion 4. As shown in FIGS. 1(a), 1(b), and 2, the mechanism accommodating portions 3 are provided upright so as to oppose each other on one end and the other end of the passage opening and closing portion 2. In the present aspect, the safety device portion 4 is disposed on one mechanism accommodating portion 3.

As shown in FIGS. 1(a) and 1(b), the water barrier panel device 1 is installed in the doorway which is formed between walls. Specifically, the passage opening and closing portion 2 is formed below a road surface which forms the doorway, and the mechanism accommodating portion 3 is disposed on each of right and left side walls of the doorway. Accordingly, under normal conditions, as shown in FIG. 1(a), the doorway is open, and thus, a person or a vehicle can go in and out through the doorway. Meanwhile, during a flood or the like, as shown in FIG. 1(b), the water barrier panel 20 is lifted, the doorway is closed, and thus, it is possible to prevent further entry of water. Hereinafter, each portion configuring the water barrier panel device 1 will be described.

As shown in FIGS. 1 to 4, the passage opening and closing portion 2 includes a bottom plate 10, partition members 11, 12, 13, 14, and 15, a water intake groove 16, a water introducing member 17, a drain member 18, a water collection bucket 19, a water barrier panel 20, a first pushing member 21, and a second pushing member 24. In addition, as described above, since the passage opening and closing portion 2 is embedded below the ground surface, all members configuring the passage opening and closing portion 2 are embedded below the ground surface except for partial members.

The bottom plate 10 and the partition members 11 and 15 are plate-shape members, the bottom plate 10 forms the bottom portion of the passage opening and closing portion 2, the partition members 11 to 15 are disposed upright on the bottom plate 10, and thus, a predetermined space (a water collection pit 2a and a water barrier panel accommodating pit 2b described below) having a box shape is formed.

As shown in FIGS. 2(a) and 2(b), the partition members 11 and 12 are disposed upright to be opposite and be separated from each other by a predetermined distance at both end portions in a width direction (a direction orthogonal to an interior-exterior direction, and a rightward-leftward direction of a paper surface in FIGS. 2(a) and 2(b), and a frontward-rearward direction on a paper surface of FIGS. 3 and 4 on the bottom plate 10. Accordingly, width direction wall portions having a box shape are formed. The partition members 11 and 12 are disposed below the walls forming the passage and the mechanism accommodating portion 3.

As shown in FIGS. 3 and 4, the partition members 13, 14, and 15 extend in the width direction of the water barrier panel device 1, and are disposed so as to be arranged at predetermined intervals in the interior-exterior direction so that the plate surfaces of the partition members 13, 14, and 15 oppose each other. In the present aspect, the partition member 13, the partition member 14, and the partition member 15 are arranged in this order from the exterior side toward the interior side. Accordingly, the partition member 13 forms an exterior side wall having a predetermined space, the partition member 15 forms an interior side wall having a predetermined space, and the partition member 14 partitions a space between the exterior side wall and the interior side wall.

The water collection pit 2a is formed of a space surrounded by the bottom plate 10, the partition members 11 and 12, the partition member 13, and the partition member 14. Moreover, the water barrier panel accommodating pit 2b is formed of a space surrounded by the bottom plate 10, the partition members 11 and 12, the partition member 14, and the partition member 15.

Here, as shown in FIGS. 3 and 4, a seal member 27a extending in the width direction is disposed on the interior side upper portion (the upper portion of the partition member 15) among the wall surfaces of the water barrier panel accommodating pit 2b. As described below, when the water barrier panel 20 is lifted, the lower surface of the water barrier panel 20 is pressed against the seal member 27a, and thus, passage of water is prevented by the seal member 27a.

In addition, as shown in FIGS. 2(a), 2(b), 3, and 4, each of seal members 27b and 27c extending upward is provided on each of guides 30a (refer to FIGS. 1(a), 2(a), and 2(b)) of a housing 30 described below in the same interior-exterior direction as the seal member 27a. Accordingly, when the water barrier panel 20 is lifted, the surfaces of the ends in the width direction of the water barrier panel 20 are pressed against the seal members 27b and 27c, and thus, passage of water is prevented.

Therefore, the lower end portion and both right and left end portions on the interior side surface of the water barrier panel 20 are pressed against the seal members 27a, 27b, and 27c while interposing the water barrier panel 20, and thus, passage of water from the exterior side to the interior side is prevented.

A cover member 28 is covered on the upper end opening of the water collection pit 2a, and forms a portion of the road surface. Preferably, a plurality of convex portions may be formed on the surface which becomes the road surface side of the cover member 28. Accordingly, slipping of a pedestrian or a vehicle is prevented.

As shown in FIGS. 3 and 4 with respect to the cross-sectional surface and as shown in FIG. 1 with respect to the outline, for example, the water intake groove 16 is a member which has a U shape and extends in the width direction of the water barrier panel device 1. The water intake groove 16 includes a water intake groove main body 16a and a grating 16b. The water intake groove main body 16a is a member having a U shaped cross-section, and is disposed so that the opening portion is directed upward. The grating 16b is a cover which covers the opening portion of the water intake groove main body 16a, and for example, is a member in which a synthetic resin material, a metal material, or the like is formed in a grating shape. Accordingly, water can pass through the grating 16b.

The water intake groove 16 is disposed on the exterior side of the partition member 13. The water intake groove 16 communicates with drain water processing equipment (not shown).

As shown in FIGS. 3 and 4, for example, the water introducing member 17 is a plate-shaped member in which the plate surface is disposed so as to be directed in the vertical direction along the upper end surface of the partition member 13. The exterior side end portion of the water introducing member 17 is disposed to communicate with the water intake groove main body 16a, and the interior side end portion of the water introducing member 17 is disposed to extend up to the water collection pit 2a. Accordingly, a water channel 17a which leads from the water intake groove main body 16a to the water collection pit 2a is formed.

It is possible to effectively introduce water overflowing from the water intake groove 16 into the water collection pit 2a by the water introducing member 17. For example, preferably, the water introducing member 17 is formed of stainless steel or steel, and more preferably, the water introducing member 17 is formed of a material which is resistant to rust.

The drain member 18 is formed to drain the water which flows into the bottom portion of the water collection pit 2a. Accordingly, one end side of the drain member 18 penetrates into the bottom plate 10 and communicates with the water collection pit 2a, and the other end side thereof communicates with the external drain water processing equipment. In addition, a check valve (one-way valve) 18a which is a valve for preventing backflow of the water is disposed at the intermediate portion of the drain member 18, and the check valve 18a prevents the water from flowing from the drain member 18 into the water collection pit 2a.

Accordingly, the water staying in the water collection pit 2a is prevented, and thus, interference with respect to lowering of the water collection bucket 19 is prevented.

In the present embodiment, the configuration is adopted in which the water is drained from the bottom portion of the water collection pit 2a while passing through the bottom portion 10. However, the present invention is not limited to this, and a configuration may be adopted in which the water is drained from the side portion while passing through the partition member, and thus, if the water can be drained from the water collection pit 2a, the place where the water is drained is not limited.

The water collection bucket 19 is a container such as a bucket or a tub in which the upper surface is opened to store the water flowing into the water collection pit 2a, and has the cross-section shown in FIGS. 3 and 4. In addition, as shown in FIG. 2(a), the water collection bucket 19 is formed in a box shape which includes a bottom portion, and an opening on the upper surface. The water collection bucket 19 is accommodated in the water collection pit 2a, and can be lifted and lowered in the water collection pit 2a. That is, the water collection bucket 19 is formed so that the width and the height of the water collection bucket 19 are slightly smaller than the width and the height of the water collection pit 2a, the water flows inside the water collection bucket 19 from the opening of the water collection bucket 19, and thus, the water collection bucket 19 can store the water.

An opening 19a which is a drain port penetrating the bottom portion of the water collection bucket 19 is provided. As understood from FIG. 2(a), in the present aspect, for example, two openings 19a are provided on end portions in the width direction of the bottom portion of the water collection bucket 19.

By providing the openings 19a, it is possible to prevent the water barrier panel device 1 from being operated and the water barrier panel 20 from being lifted. That is, for example, in a case where water of a predetermined amount flows into the water collection bucket 19 over a long time period, or the like, if the openings 19a are not provided, the predetermined amount of water is stored in the water collection bucket 19. Accordingly, there is a possibility that the water barrier panel device 1 may be operated. On the other hand, since the openings 19a are provided, when the amount of the water flowing into the water collection bucket 19 per unit time is equal to or less than a predetermined amount, the water is discharged from the water collection bucket 19, and thus, the water is not stored in the water collection bucket 19. Accordingly, it is possible to prevent the water barrier panel from being lifted.

For example, since the water barrier panel device is controlled without using a power source such as electricity and the water barrier panel is moved up and down by the weight of the stored water in the water collection bucket, even when a predetermined amount of water flows in the water collection bucket over a long time period or the like, and the amount of the water stored in the water barrier bucket exceeds a constant amount, the water barrier panel may be lifted. In addition, the flow rate of the water which operates the water barrier panel is different according to the environment in which the water barrier panel device is installed.

Meanwhile, according to the water drain portion 18 and the openings 19a, it is possible to adjust lifting timing of the water barrier panel, and thus, it is possible to solve the problem with respect to the control of the lifting of the water barrier panel.

Total area of the openings 19a can be adjusted in consideration of the desire of a user, conditions of drain equipment of the location, or the like. That is, when the amount of the water flowing into the water collection bucket 19 per unit time is less than a predetermined amount based on the conditions or the like, the amount of the water discharged from the openings 19a is greater than the amount of the water flowing into the water collection bucket 19. Meanwhile, when the amount of the water which flows into the water collection bucket 19 per unit time is equal to or more than a predetermined amount, since the water flowing into the water collection bucket 19 is greater than the amount of the water drained from the openings 19a, the water is stored in the water collection bucket 19. In this case, the number, positions, and shapes of the openings are not particularly limited. However, for example, considering a case where the openings are blocked by foreign matters flowing into the openings and the functions are not exerted, preferably, multiple openings are disposed at positions separated from each other, and the diameter of each of the openings may be equal to or more than a predetermined dimension. In addition, the opening(s) may be provided on the side portion of the partition member to drain water. However, from the viewpoint of efficiency in the water drainage, preferably, the opening is positioned on the bottom portion.

In addition, along with the openings 19a, or instead of the openings 19a, for example, a counterweight 19b may be disposed in the water collection bucket 19. Accordingly, timing in the lifting of the water barrier panel 20 can be adjusted. Compared to a case where the weight of the counterweight 19b is reduced, if the weight of the counterweight 19b is increased, it is possible to lift the water barrier panel 20 even when the storage amount of the water in the water collection bucket 19 is decreased.

Moreover, a seal member 19c may be disposed on an edge of the upper end of the water collection bucket 19. The seal member 19c is attached to seal a gap between the water collection bucket 19 and the inner wall surface of the water collection pit 2a. Accordingly, it is possible to prevent the water from entering the gap between the water collection bucket 19 and the water collection pit 2a.

As shown in FIGS. 3 and 4, for example, the water barrier panel 20 is a plate-shaped member which blocks a portion of a doorway of a building or the like and can block the water in a state where the water barrier panel 20 is lifted, and as shown in FIGS. 1(a), 1(b), and 2(b), the water barrier panel 20 extends in the width direction of the water barrier panel device 1.

The water barrier panel 20 includes a water barrier panel main body 20a which functions as a damming plate for blocking the water, and a cover member 20b made of a steel plate which is fixed to the upper end portion of the water barrier panel main body 20a and functions as a portion of the road surface.

The water barrier panel main body 20a includes a foaming material panel such as styrene foam which is light in weight and has strength, and a thin plate material such as a stainless steel plate which coats the entire surface of the foaming material panel and has corrosion resistance and strength. In this way, in the water barrier panel 20, since the foaming material panel which is light in the weight and has a small specific gravity is used inside the water barrier panel main body 20a, reduction in weight is improved. Accordingly, it is possible to decrease a force which is required for hanging the water barrier panel 20 to be lifted and lowered. In addition, since the surface of the foaming material panel is coated with the thin plate material which is harder than the foaming material panel, it is possible to prevent the foaming material panel from being damaged.

Here, the example in which the foaming material panel is used for the water barrier panel main body 20a is described. However, other materials may be used, and for example, a honeycomb core material may be used. Accordingly, it is possible to increase the strength of the water barrier panel main body 20a.

The cover member 20b is a plate material made of a steel plate which is fixed to the upper end portion of the water barrier panel main body 20a and is flush with the road surface. Preferably, a plurality of convex portions is formed on the surface which becomes the road surface side of the cover member 20b. Accordingly, slipping of a pedestrian or a vehicle is prevented. In addition, preferably, the plate used for the cover member 20b is a checkered steel plate, and is formed of the same material as the thin plate material of the water barrier panel main body 20a.

In the water barrier panel 20, the water barrier panel main body 20a is disposed in the water barrier panel accommodating pit 2b so as to be retractable from the water barrier panel accommodating pit 2b. That is, the water barrier panel main body 20a is configured so as to be changed to a state where the entirety of the water barrier panel main body 20a is accommodated in the water barrier panel accommodating pit 2b (FIG. 3) and a state where a portion of the water barrier panel main body 20a is accommodated in the water barrier panel accommodating pit 2b and other portions thereof protrude from the road surface (FIG. 4).

Moreover, as shown in FIG. 3, the cover member 20b covers the upper opening of the water barrier panel accommodating pit 2b in the state where the entirety of the water barrier panel main body 20 is stored in the water barrier panel accommodating pit 2b.

Here, the water barrier panel 20 is configured so as to be heavier than the total weight of the water collection bucket 19 (including the counterweight 19b), a connection bracket 37, and a movement sprocket 38. Accordingly, under normal conditions, it is possible to appropriately accommodate the water barrier panel 20 inside the water barrier panel accommodating pit 2b.

The first pushing member 21 includes a pressing member 22 and a receiving member 23. As shown in FIGS. 3 and 4, for example, the pressing member 22 is disposed at the exterior side upper portion on the wall surface of the water barrier panel accommodating pit 2b. The pressing member 22 includes a portion which is inclined toward the interior side upper portion. That is, the pressing member 22 includes a portion which is inclined in a direction intersecting a lifting-lowering direction of the water barrier panel 20.

Meanwhile, the receiving member 23 is disposed on the exterior side lower portion of the water barrier panel 20. The receiving member 23 includes an inclined portion corresponding to the pressing member 22.

As shown in FIG. 4, when the water barrier panel 20 is lifted, in the pressing member 22 and the receiving member 23, the portions which are inclined at the lower end portion of the water barrier panel 20 come into contact with each other, and the first pushing member 21 presses the water barrier panel 20 toward the inner side of the passage.

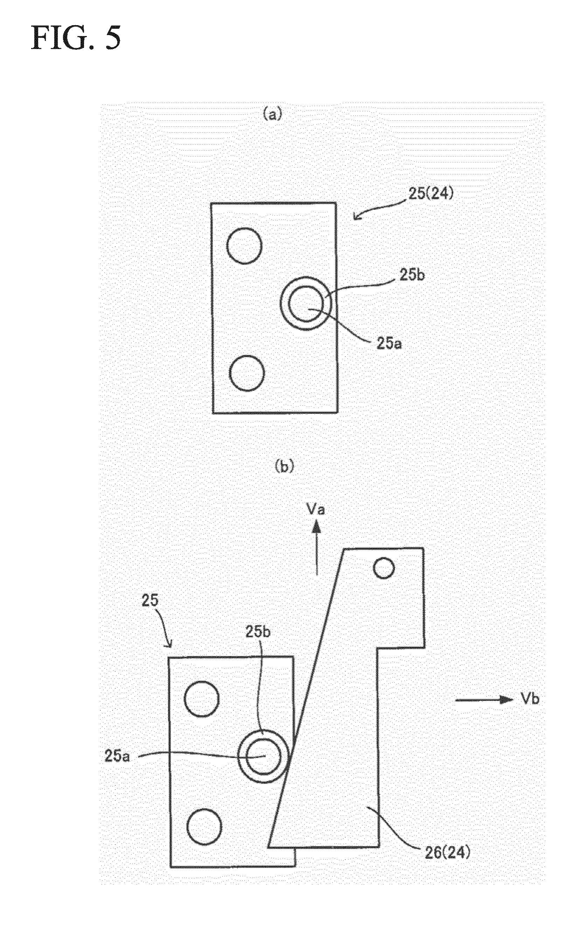

The second pushing member 24 includes a pressing member 25 and a receiving member 26. FIG. 5(a) is a view when viewed from the same view point as FIG. 3 in a state where only the pressing member 25 is focused, and FIG. 5(b) is a view showing a state where the pressing member 25 comes into contact with a receiving member 26 in the state in which the water barrier panel 20 is lifted in a manner similar to that shown in FIG. 4.

As shown in FIGS. 5(a) and 5(b), for example, the pressing member 25 includes a cylindrical roller 25b which is rotated about a shaft 25a. The shaft 25a is directly fixed to the housing 30 or is fixed to the housing 30 via other members, and an axial center direction of the shaft 25a is the width direction of the water barrier panel 20. Accordingly, the cylindrical roller 25b is disposed so as to be rotated on a plane including an inside-outside direction of the passage.

Meanwhile, as shown in FIG. 5(b), the receiving member 26 is configured so that the portion of the receiving member 26 coming into contact with the pressing member 25 in the state where the water barrier panel 20 is lifted is the inclined surface. That is, the receiving member 26 includes a surface inclined with respect to the lifting-lowering direction of the water barrier panel 20. As shown in FIG. 2(b), the receiving member 26 is disposed on each of the end surfaces in the width direction of the water barrier panel 20.

In the pressing member 25 and the receiving member 26, when the water barrier panel 20 is lifted as shown in FIG. 4 and thus, the receiving member 26 is lifted as shown by Va in FIG. 5(b), the inclined surface of the receiving member 26 comes into contact with the cylindrical roller 25b of the pressing member 25, a force is operated as shown by Vb in FIG. 5(b) due to a wedge effect, and the water barrier panel 20 can be pressed to the inner side of the passage. In this case, since the pressing member 25 side is configured to include the cylindrical roller 25, it is possible to decrease the movement resistance of the water barrier panel 20 after the pressing member 25 and the receiving member 26 come into contact with each other, and thus, it is possible to more smoothly operate the water barrier panel 20.

In addition, in a state where the water barrier panel 20 is lifted the most, the second pushing member 24 is disposed so that the second pushing member 24 and the water barrier panel 20 come into contact with each other above the half of the water barrier panel 20.

Here, in the first pushing member 21 and the second pushing member 24, as understood from FIG. 4, preferably, the pressing members 22 and 25 and the receiving members 23 and 26 come into contact with each other at approximately the same timing in the state where the water barrier panel 20 is lifted the most. Accordingly, it is possible to smoothly move the water barrier panel 20 to the interior side. Therefore, the distance between the pressing member 22 and the receiving member 23 may be the same as the distance between the pressing member 25 and the receiving member 26. In addition, in this case, preferably, one of the first pushing member and the second pushing member presses the lower end portion of the water barrier panel 20, and the other thereof presses the portion above the half of the water barrier panel 20. Accordingly, it is possible to more uniformly press the water barrier panel 20 against the seal material.

Considering properties of the water barrier panel device, a case where a step of manually increasing cut-off performance of the water barrier panel is necessary at the time of flood or the like is not preferable.

Meanwhile, according to the pushing members, it is possible to simply increase the cut-off performance when the water barrier panel is lifted, and it is possible to solve the problem with respect to the lifting control of the water barrier panel.

Next, the mechanism accommodating portion 3 will be described. As described above, the mechanism accommodating portion 3 is provided on each of the end portions in the width direction of the passage opening and closing portion 2, and is provided on each of the right and left walls in the width direction. Accordingly, as understood from FIGS. 1 and 2, two mechanism accommodating portions 3 are provided so as to oppose each other. However, since basic structures of the two mechanism accommodating portions 3 are the same as each other, here, only one mechanism accommodating portion 3 will be described.

The mechanism accommodating portion 3 includes the housing 30 and a transmission mechanism 31 which is accommodated in the housing 30.

The housing 30 is a member which forms a shell of the mechanism accommodating portion 3, is formed in a box shape, and is configured to accommodate the transmission mechanism 31 inside the housing 30. Accordingly, plate-shaped members are combined with each other, and thus, the housing 30 is formed.

In addition, as shown in FIGS. 1(a), 2(a), and 2(b), guides 30a which guide the right and left end portions of the water barrier panel 20 and on which the seal members 27b and 27c are disposed are provided in the housing 30.

The transmission mechanism 31 is a mechanism which interlocks the water collection bucket 19 and the water barrier panel 20 and has a function associated with the lifting and the lowering between the water collection bucket 19 and the water barrier panel 20. That is, the transmission mechanism 31 is a mechanism which connects the water barrier panel 20 and the water collection bucket 19, and converts a force generated when the water collection bucket 19 is lowered into a force for lifting the water barrier panel 20. In addition, a member for increasing convenience of a user with respect to the lifting of the water barrier panel 20 is provided in the transmission mechanism 31.

In the present aspect, the transmission mechanism 31 includes a lifting chain 32, a first guide sprocket 35, a second guide sprocket 36, the connection bracket 37, the movement sprocket 38, a water barrier panel control mechanism 40, and a water barrier panel speed-reduction mechanism 50.

The lifting chain 32 functions as a force transmission member, and is a chain which transmits a force between the water collection bucket 19 and the water barrier panel 20 to interlock both. In each drawing, for easy understanding, the lifting chain 32 is shown by a thick dashed line. One end of the lifting chain 32 is fixed to the housing 30 by a fixing member 34. Accordingly, the movement of the end portion fixed by the fixing member 34 is regulated. Meanwhile, the other end of the lifting chain 32 is fixed to the side surface in the width direction of the water barrier panel 20 by a fixing member 33. Accordingly, the other end of the lifting chain 32 moves up and down according to the lifting and the lowering of the water barrier panel 20. In the present aspect, the fixing member 33 is integrally formed with the receiving member 26.

In addition, the portion between both ends of the lifting chain 32 is wound around the first guide sprocket 35, the second guide sprocket 36, and the movement sprocket 38, and thus, is held in the housing 30.

The first guide sprocket 35 is a sprocket gear in which a plurality of teeth capable of engaging with the lifting chain 32 is formed on the outer circumference. Accordingly, the first guide sprocket 35 can be rotated about a shaft thereof, the shaft is fixed to the housing 30, and thus, the movement of the first guide sprocket 35 is limited. Therefore, the first guide sprocket 35 is disposed so as to be rotated while being fixed at a predetermined location of the housing 30.

Moreover, the first guide sprocket 35 is disposed above the water barrier panel 20, and the height position of the first guide sprocket 35 (the position in the vertical direction on the paper surface of FIGS. 3 and 4) is set to a position at which the first guide sprocket can hold the water barrier panel 20 by the lifting chain 32 even in the state where the water barrier panel 20 is lifted the most. Meanwhile, the position (the position in the rightward-leftward direction on the paper surface of FIGS. 3 and 4) in the interior-exterior direction of the first guide sprocket 35 is not particularly limited. Preferably, an aspect is adopted in which one end side of the lifting chain 32 vertically extends downward from the inner side of the passage (the right side on the paper surface in FIGS. 3 and 4) of the first guide sprocket 35 and the one end is fixed to the water barrier panel 20. Accordingly, it is possible to lift the water barrier panel 20 vertically, and to move the water barrier panel 20 more smoothly up and down.

Similar to the first guide sprocket 35, the second guide sprocket 36 is a sprocket gear in which a plurality of teeth capable of engaging with the lifting chain 32 is formed on the outer circumference. Accordingly, the second guide sprocket 36 can be rotated about a shaft thereof, the shaft is fixed to the housing 30, and thus, the movement of the second guide sprocket 36 is limited. Therefore, the second guide sprocket 36 is disposed so as to be rotated while being fixed at a predetermined location of the housing 30.

The second guide sprocket 36 is disposed on the exterior side farther than the first guide sprocket 35, and the height position of the second guide sprocket 36 is set to approximately the same position as the first guide sprocket 35.

The connection bracket 37 is a plate-shaped member which is fixed to the side surface in the width direction of the water collection bucket 19, and the movement sprocket 38 is disposed on the connection bracket 37.

The movement sprocket 38 is a sprocket gear in which a plurality of teeth capable of engaging with the lifting chain 32 is formed on the outer circumference. Therefore, the movement sprocket 38 can be rotated about a shaft, and the shaft is fixed to the connection bracket 37.

As described above, since the water collection bucket 19 is disposed so as to move up and down, the connection bracket 37 and the movement sprocket 38 can also move up and down following the water collection bucket 19.

The lifting chain 32 is wound around the above-described first guide sprocket 35, second guide sprocket 36, and movement sprocket 38 as follows. That is, the lifting chain 32 is wound around the first guide sprocket 35 and the second guide sprocket 36 from the upper portion between the exterior side end portion and the interior side end portion of the lifting chain 32. Meanwhile, the movement sprocket 38 is wound by the lifting chain 32 so as to be loaded on the lifting chain 32 between the second guide sprocket 36 and the exterior side end portion of the lifting chain 32. Accordingly, the movement sprocket 38, the connection bracket 37, and the water collection bucket 19 are hung to be suspended by the lifting chain 32.

The water barrier panel control mechanism 40 functions as at least one mechanism among a mechanism which limits the lowering of the water barrier panel 20, a mechanism which limits the lifting of the water barrier panel 20, and a mechanism which switches the lifting and the lowering of the water barrier panel 20. In the present aspect, the water barrier panel control mechanism 40 includes a control sprocket 41, a water barrier panel lowering limiting arm 42, a water barrier panel lifting limiting arm 43, a switching operation member 44, and a cover 45 which houses at least a portion of the foregoing components, and the lowering limiting arm and the lifting limiting arm come into contact with teeth different from each other.

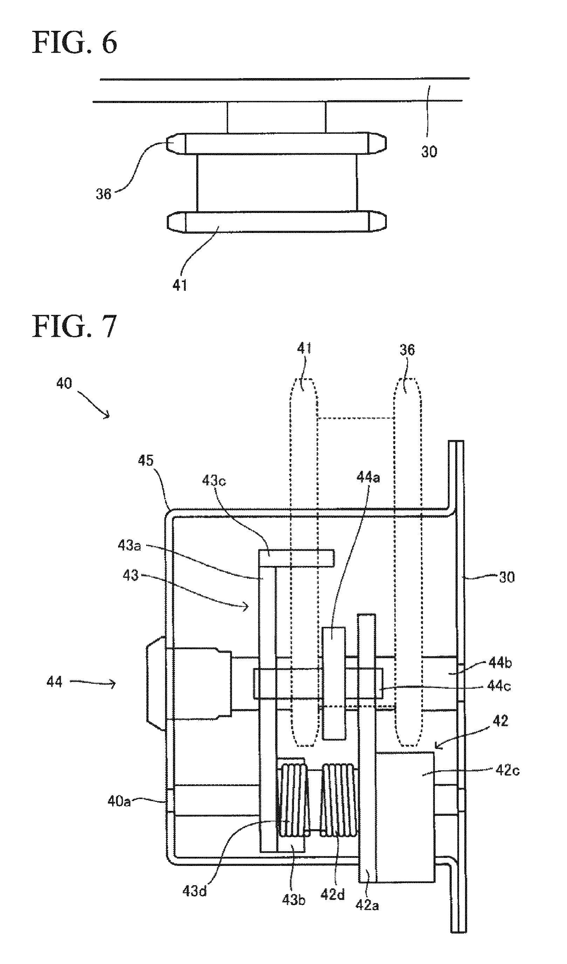

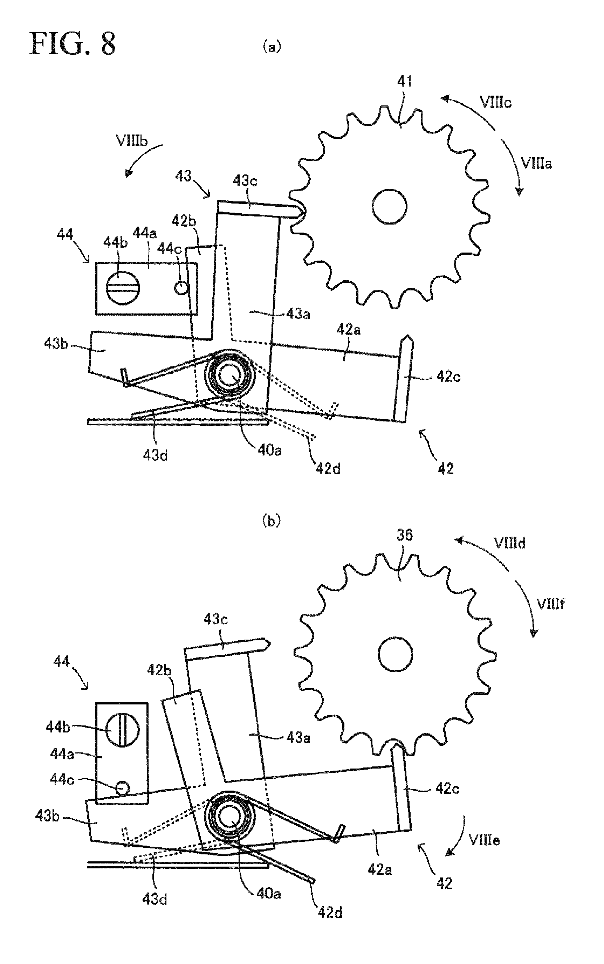

FIG. 6 is a view when the portion of the second guide sprocket 36 is viewed from above in FIG. 3, and accordingly, in FIG. 6, the control sprocket 41 is shown. FIG. 7 is a view when the water barrier panel control mechanism 40 is viewed from the inner side of the passage. In addition, FIG. 8 is a view showing the portions of the water barrier panel control mechanism 40 hidden by the cover 45. FIG. 8(a) is a view showing one state of the water barrier panel control mechanism 40 and FIG. 8(b) is a view showing another state of the water barrier panel control mechanism 40.

The control sprocket 41 is a sprocket gear in which a plurality of teeth similar to those of the second guide sprocket 36 is formed on the outer circumference. As understood from FIG. 6, the control sprocket 41 is disposed so as to be coaxial with the second guide sprocket 36 on a side (a center side) opposite to the housing 30 side from the second guide sprocket 36. The control sprocket 41 is configured to interlock with the second guide sprocket 36. Accordingly, if any one of the second guide sprocket 36 and the control sprocket 41 is rotated, the other is also rotated, and if the rotation of the one is limited, the rotation of the other is also limited. In FIGS. 3 and 4, the control sprocket 41 is omitted so as to explain the second guide sprocket 36.

The water barrier panel lowering limiting arm 42 includes a first arm 42a, a second arm 42b, and a locking protrusion 42c. Each of the first arm 42a and the second arm 42b is a plate-shaped member which extends in first direction, and as understood from FIGS. 8(a) and 8(b), the first arm 42a and the second arm 42b are formed in an approximately L shape so that the one end sides of the first arm 42a and the second arm 42b are connected to each other and the extension directions of the arms 42a and 42b are different from each other. The locking protrusion 42c, which protrudes in the direction orthogonal to the direction in which the first arm 42a extends, is provided on the end portion opposite to the side of the first arm 42a connected to the second arm 42b. Moreover, the water barrier panel lowering limiting arm 42 can be rotated about a shaft 40a which is provided on the portion at which the first arm 42a and the second arm 42b formed in an approximately L shape intersect each other, and is biased by an elastic member 42d. Here, as understood from FIG. 7, the locking protrusion 42c extends to the housing 30 side to reach a position at which the locking protrusion 42c can engage with the second guide sprocket 36.

The water barrier panel lifting arm 43 includes a first arm 43a, a second arm 43b, and a locking protrusion 43c. Each of the first arm 43a and the second arm 43b is a plate-shaped member which extends in first direction, and as understood from FIGS. 8(a) and 8(b), the first arm 43a and the second arm 43b are formed in an approximately L shape so that the one end sides of the first arm 43a and the second arm 43b are connected to each other and the extension directions of the arms 43a and 43b are different from each other. The locking protrusion 43c, which protrudes in the direction orthogonal to the direction in which the first arm 43a extends, is provided on the end portion opposite to the side of the first arm 43a connected to the second arm 43b. Moreover, the water barrier panel lifting arm 43 can be rotated about the shaft 40a which is provided on the portion at which the first arm 43a and the second arm 43b formed in an approximately L shape intersect each other, and is biased by an elastic member 43d. Here, as shown in FIG. 7, the locking protrusion 43c extends to the housing 30 side to reach a position at which the locking protrusion 43c can engage with the control sprocket 41. In addition, the second arm 43b also extends to the housing 30 side to reach a position at which the second arm 43b can engage with the switching operation member 44.

As understood from FIGS. 8(a) and 8(b), the switching operation member 44 includes a substrate 44a, a rotary shaft 44b, and an eccentric member 44c. The substrate 44a is a plate-shaped member, and the rotary shaft 44b is disposed so as to penetrate the substrate in a thickness direction thereof. As shown in FIGS. 8(a) and 8(b), a groove for rotating the rotary shaft 44b is provided on one side of the rotary shaft 44b. In addition, an eccentric member 44c is provided at a portion separated from the rotary shaft 44b by a predetermined distance on the substrate 44a. In the present aspect, the eccentric member 44c is a columnar member, and as understood from FIG. 7, is formed to protrude in the direction of the housing 30 and to the side opposite to the housing 30 from the substrate 44a. The protrusion amount of the eccentric member 44c is adjusted so that the eccentric member 44c can engage with the second arms 42b and 43b.

The cover 45 houses the water barrier panel lowering limiting arm 42, the water barrier panel lifting limiting arm 43, and the switching operation member 44 among walls of the housing 30 to hide the foregoing components, and functions as a bearing on one side of each of the rotary shafts 40a and 44a. Accordingly, the cover 45 is formed of a plate-shaped member.

The above-described components are combined as follows and thus, configure the water barrier panel control mechanism 40. As understood from FIGS. 7, 8(a), and 8(b), the water barrier panel lowering limiting arm 42, and the water barrier panel lifting limiting arm 43 are coaxially disposed on the rotary shaft 40a in this order from the housing 30 side. The water barrier panel lowering limiting arm 42 and the water barrier panel lifting limiting arm 43 are attached to the rotary shaft 40a so as to interlock with each other. Accordingly, one of the water barrier panel lowering limiting arm 42 and the water barrier panel lifting limiting arm 43 is rotated about the rotary shaft 40a, and then the other is rotated. In the present aspect, the rotary shaft 40a is disposed outward farther in the passage than the second guide sprocket 36 and the control sprocket 41.

In this case, in the water barrier panel lowering limiting arm 42, the first arm 42a extends below the second guide sprocket 36 from the rotary shaft 40a, the locking protrusion 42c protrudes toward the second guide sprocket 36 side, and the second arm 42b is disposed outside the passage and is disposed so as to be directed upward. In addition, in the water barrier panel lowering limiting arm 42, the locking protrusion 42c is biased in the direction toward the second guide sprocket 36 by the elastic member 42d.

Meanwhile, in the water barrier panel lifting limiting arm 43, the first arm 43a extends upward from the rotary shaft 40a, the locking protrusion 43c protrudes toward the control sprocket 41 side, and the second arm 43b is disposed outside the passage and is disposed toward the outside in the passage from the rotary shaft 40a. Moreover, in the water barrier panel lifting limiting arm 43, the locking protrusion 43c is biased in the direction toward the control sprocket 41 by the elastic member 43d.

The substrate 44a of the switching operation member 44 is disposed between the water barrier panel lowering limiting arm 42 and the water barrier panel lifting limiting arm 43 when viewed from the viewpoint of FIG. 7, and is disposed on the outside in the passage of the second arm 42b above the second arm 43b when viewed from the viewpoints of FIGS. 8(a) and 8(b). As understood from FIG. 7, the switching operation member 44 can be rotated by the rotary shaft 44b which is disposed so as to be supported by the housing 30 and the cover 45 serving as bearings. Accordingly, the substrate 44a is rotated following the rotation of the rotary shaft 44b, and thus, the eccentric member 44c is rotated to revolve around the rotary shaft 44b.

Next, an operation of the water barrier panel control mechanism 40 will be described. Each of the components included in the water barrier panel control mechanism 40 is disposed to include the above-described configurations. However, the detailed configuration or disposition is adjusted within a range capable of realizing the operation described below.

First, the state shown in FIG. 8(a), that is, the state where the locking protrusion 43c of the water barrier panel lifting limiting arm 43 is locked to the control sprocket 41 will be described. In this case, the eccentric member 44c of the switching operation member is disposed inward farther in the passage than the rotary shaft 44b, and presses the second arm 42b. Accordingly, the first arm 42a is rotated downward, and the locking protrusion 42c is separated from the second guide sprocket 36. Since the first arm 43a and the second arm 43b are coaxially attached to the rotary shaft 40a, the first arm 43a and the second arm 43b are rotated about the rotary shaft 40a, and the locking protrusion 43c shown in FIG. 8(a) engages with the control sprocket 41. As described above, since the first arm 43a is biased by the elastic member 43d, the locking protrusion 43 is locked in a state where the locking protrusion 43 is pressed against the control sprocket 41.

In this case, the locking protrusion 43c is configured so that the first arm 43a is rotated in the VIIIb direction about the rotary shaft 40a against biasing forces of the elastic members 42d and 43d with respect to the rotation in the VIIIa direction of the control sprocket 41, and thus, the locking protrusion 43 permits the rotation in the VIIIa direction of the control sprocket 41. Meanwhile, the locking protrusion 43c is locked to the sprocket teeth of the control sprocket 41 with respect to the rotation in the VIIIc direction of the control sprocket 41 and limits the rotation in the Vlllc direction of the control sprocket 41. The configuration for achieving for the above-described matters is not particularly limited. The configuration may be achieved by adjusting the lock positions or the lock angles of the sprocket teeth of the locking protrusion 43c, or by adjusting the tip shape of the locking protrusion 43c.

Next, the state shown in FIG. 8(b), that is, the state where the locking protrusion 42c of the water barrier panel lowering limiting arm 42 is locked to the second guide sprocket 36 will be described. In order to change the state shown in FIG. 8(a) to the state shown in FIG. 8(b), the eccentric member 44c is rotated so as to be positioned below the rotary shaft 44b by rotating the rotary shaft 44b. Accordingly, the eccentric member 44c presses the second arm 43b. Therefore, the first arm 43a is rotated to the outside in the passage, and the locking protrusion 43c is separated from the control sprocket 41. Since the first arm 42a and the second arm 42b are coaxially attached to the second arm 43b and the rotary shaft 40a, the first arm 43a and the second arm 43b are rotated about the rotary shaft 40a, and the locking protrusion 42c is locked to the second guide sprocket 36. As described above, since the first arm 42a is biased by the elastic member 42d, the locking protrusion 42c is locked in a state where the locking protrusion 42c is pressed against the second guide sprocket 36.

In this case, the locking protrusion 42c is configured so that the first arm 42a is rotated in the VIIIe direction about the rotary shaft 40a against biasing forces of the elastic members 42d and 43d with respect to the rotation in the VIIId direction of the second guide sprocket 36, and thus, the locking protrusion 42c permits the rotation in the VIIId direction of the second guide sprocket 36. Meanwhile, the locking protrusion 42c is locked to the sprocket teeth of the second guide sprocket 36 with respect to the rotation in the VIIIf direction of the second guide sprocket 36 and limits the rotation in the VIIIf direction of the second guide sprocket 36. The configuration for achieving the above-described matters is not particularly limited. The configuration may be achieved by adjusting the lock positions or the lock angles of the sprocket teeth of the locking protrusion 42c, or by adjusting the tip shape of the locking protrusion 42c.

The water barrier panel speed-reduction mechanism 50 is a mechanism which decreases the increasing speed of the water barrier panel 20 and prevents rapid lifting of the water barrier panel 20. In the present aspect, the water barrier panel speed-reduction mechanism 50 includes a swing plate 51, a speed-reduction sprocket 52, an operating portion 53, a guide 54, and a cover 55 which includes at least a portion of the foregoing components.

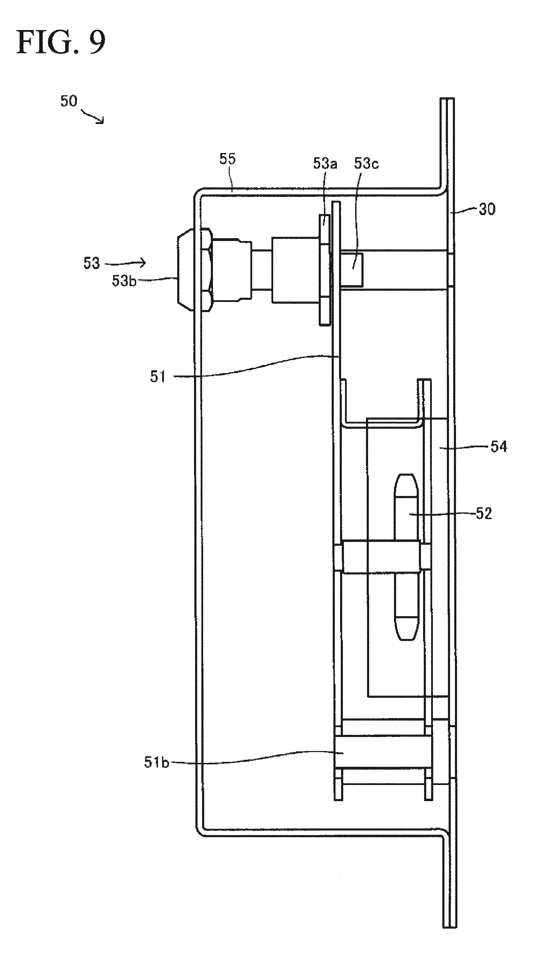

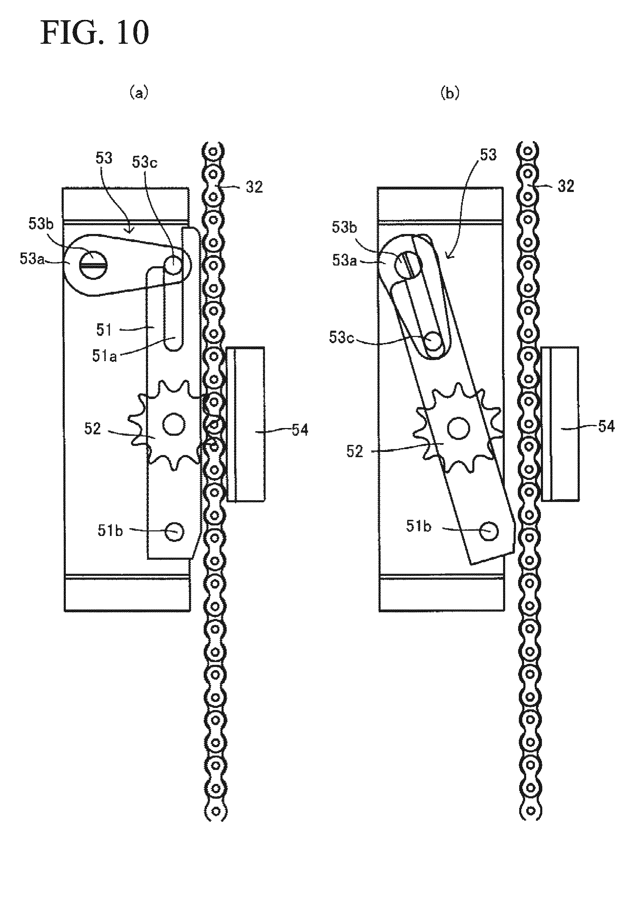

FIG. 9 is a view showing the water barrier panel speed-reduction mechanism 50 when viewed from the inner side of the passage. In addition, FIG. 10 is a view showing the portions of the water barrier panel speed-reduction mechanism 50 hidden by the cover 55. FIG. 10(a) shows one state of the water barrier panel speed-reduction mechanism 50, and FIG. 10(b) shows another state of the water barrier panel speed-reduction mechanism 50.

The swing plate 51 is a plate-shaped member which is long in the first direction, and a slit 51 a is provided on one end side in the longitudinal direction. The width of the slit 51 a is set so that an eccentric member 53c of the operating portion 53 moves inside the slit 51a.

Similar to the second guide sprocket 36 or the like, the speed-reduction sprocket 52 is a sprocket gear in which a plurality of teeth is provided on the outer circumference. As understood from FIGS. 9, 10(a), and 10(b), the speed-reduction sprocket 52 is rotatably attached to approximately the center in the longitudinal direction of the swing plate 51. Moreover, a load member (not shown) resisting the rotation of the speed-reduction sprocket 52 is provided in the speed-reduction sprocket 52. Accordingly, if the speed-reduction sprocket 52 is rotated, a force against the rotation is operated to the speed-reduction sprocket 52. A specific shape of the load member is not particularly limited, and a well-known member may be used. For example, there may be a rotary damper as the load member. In this case, the rotary damper is housed in the speed-reduction sprocket, and may be coaxially disposed on the speed-reduction sprocket. In addition to the rotary damper, it is possible to combine a member which can control the rotating force in the first direction and can apply the general rotating force in the second direction different from the first direction or a member which converts the rotating force into a linear force with a member such as a shock absorber which controls the linear force. In addition, it is possible to control either the lifting speed or the lowering speed by controlling the rotating forces of the first guide sprocket and the second guide sprocket guide, or simultaneously control both the lifting speed and the lowering speed.

As shown in FIGS. 9, 10(a), and 10(b), the operating portion 53 includes a substrate 53a, a rotary shaft 53b, and the eccentric member 53c. The substrate 53a is a plate-shaped member, and the rotary shaft 53b is disposed so as to penetrate the substrate 53a in the thickness direction of the substrate. As shown in FIGS. 10(a) and 10(b), a groove for rotating the rotary shaft 53b is provided on one side of the rotary shaft 53b. In addition, the eccentric member 53c is provided at a portion separated by a predetermined distance from the rotary shaft 53b on the substrate 53a. In the present aspect, the eccentric member 53 is a columnar member, and as understood from FIG. 9, is formed so as to protrude from the substrate 53a in the direction of the housing 30.

The guide 54 is a member which is formed in an L shape and has a predetermined length, and supports the lifting chain 32 from the side opposite to the lifting chain 32 so that the lifting chain 32 is not detached when the speed-reduction sprocket 52 engages with the lifting chain 32, as described below.

The cover 55 houses the above-described members between the walls of the housing 30 and the cover to hide the members, and functions as a bearing of one side of the rotary shaft 53b of the operating portion 53. Accordingly, the cover 55 is formed by bending a plate-shaped material or the like.

The above-described components are combined as follows, and thus, configure the water barrier panel speed-reduction mechanism 50.

The swing plate 51 is fixed to the housing 30 so as to be rotatable (swingable) about the rotary shaft 51 b at the end portion opposite to the side on which the slit 51 a is included. Meanwhile, the end portion of the side on which the slit 51 a is included is disposed so as to extend upward from the rotary shaft 51 b side. In addition, the speed-reduction sprocket 52 is rotatably fixed to the swing plate 51. However, in the present aspect, as understood from FIG. 9, the speed-reduction sprocket 52 is fixed to the surface which becomes the housing 30 side of the swing plate 51.

The substrate 53a of the operating portion 53 is disposed on the side opposite to the housing 30 from the swing plate 51 from the viewpoint shown in FIG. 9. The substrate 53a can be rotated by the rotary shaft 53b which is disposed so as to be supported by the housing 30 and the cover 55 serving as bearings. In addition, the eccentric member 53c protrudes to the housing 30 side from the substrate 53a, and is disposed so that the protruded portion penetrates the slit 51 a of the swing plate 51. Accordingly, the substrate 53a is rotated following the rotation of the rotary shaft 53b, and thus, the eccentric member 53c is rotated so as to revolve around the rotary shaft 53b. In addition, the swing plate 51 is swung about the rotary shaft 51 b following the positional change of the eccentric member 53c generated by the rotation of the eccentric member 53c.

As understood from FIGS. 9, 10(a), and 10(b), the guide 54 is disposed on the passage outlet side at a predetermined interval from the speed-reduction sprocket 52, and is disposed so that the lifting chain 32 passes through a portion between the speed-reduction sprocket 52 and the guide 54. Accordingly, the guide 54 is disposed so that the longitudinal direction of the guide 54 extends in the vertical direction. In addition, as described above, the cross-section of the guide 54 is formed in an L shape, one side of the guide 54 is disposed to overlap with the housing 30 and is fixed to the housing 30, and the other side is upright disposed on the housing 30.

Next, an operation of the water barrier panel speed-reduction mechanism 50 will be described. Each of the components included in the water barrier panel speed-reduction mechanism 50 is disposed to include the above-described configurations. However, the detailed configuration or disposition is adjusted within a range capable of realizing the operation described below.

First, the state shown in FIGS. 10(a) will be described. In this case, the eccentric member 53c of the operating portion 53 is disposed inward farther in the passage than the rotary shaft 53b, and the swing plate 51 is held so as to approach the lifting chain 32. Accordingly, the speed-reduction sprocket 52 engages with the lifting chain 32, and the speed-reduction sprocket 52 is rotated according to the movement of the lifting chain 32. In addition, since the upright disposed side of the guide 54 is provided to oppose the speed-reduction sprocket 52, the guide 54 prevents the lifting chain 32 from being detached to the opposite side when the speed-reduction sprocket 52 engages with the lifting chain 32, and thus, reliable engagement is performed.

Accordingly, when the lifting chain 32 moves to lift the water barrier panel 20, the speed-reduction sprocket 52 is rotated and thus, it is possible to decrease the movement speed of the lifting chain 32. Therefore, it is possible to prevent the water barrier panel 20 from being abruptly lifted rapidly.

Next, the state shown in FIG. 10(b) will be described. In order to change the state shown in FIG. 10(a) to the state shown in FIG. 10(b), the substrate 53a is rotated by rotating the rotary shaft 53b so that the eccentric member 53c is positioned below the rotary shaft 53b. Accordingly, the eccentric member 53c moves inside the slit 51a, and it is possible to rotate the swing plate 51 in the direction separated from the lifting chain 32. Therefore, the speed-reduction sprocket 52 is separated from the lifting chain 32, and the speed-reduction sprocket 52 is released from the engagement state. Accordingly, it is possible to cancel (disable) the speed-reduction function.

Here, the example is described as the water barrier panel speed-reduction mechanism. However, other shapes may be adopted as long as the water barrier panel speed-reduction mechanism is operated against the lifting force of the water barrier panel and the lifting speed of the water barrier panel is decreased. For example, a mechanism may be disposed, which applies a movement load to the rotary shafts of the first guide sprocket 35, the second guide sprocket 36, and the movement sprocket 37, or the portion between the water barrier panel 20 and the water barrier panel accommodating pit 2b.

Since the water barrier panel device is operated by the weight of the water stored in the water collection bucket 19 without using a power source such as electricity, there is a possibility that the water barrier panel 20 may be lifted at an unexpected speed when water flows into the water collection bucket 19for a short time period due to heavy rain or the like. The rapid lifting of the water barrier panel 20 should be avoided.

According to the water barrier panel speed-reduction mechanism, it is possible to limit the lifting speed of the water barrier panel, and it is possible to solve the problems related to the control of the lifting of the water barrier panel.

The safety device portion 4 shown in FIGS. 1 to 4 will be described. The safety device portion 4 is a portion which is provided on the assumption of problems occurring when the water barrier panel 20 is lifted. In the present embodiment, the safety device portion 4 includes a controller 60, a flow rate detection sensor 61, an outside detection sensor 70, an inside detection sensor 71, a speaker 75, a rotating lamp 76, and a brake mechanism 80. In order to prevent the water barrier panel 20 from being lifted without warning, the safety device portion 4 includes a function which issues a warning before the water barrier panel 20 is lifted, and a function which automatically detects an obstacle such as a vehicle when there is an obstacle immediately above the water barrier panel 20 and temporarily stops the lifting of the water barrier panel 20.

The controller 60 receives signals from the flow rate detection sensor 61, the outside detection sensor 70, and the inside detection sensor 71, performs calculation based on the received signals, and sends operation signals to the speaker 75, the rotating lamp 76, and the brake mechanism 80 based on the calculated results. Accordingly, the flow rate detection sensor 61, the outside detection sensor 70, the inside detection sensor 71, the speaker 75, the rotating lamp 76, and the brake mechanism 80 are electrically connected to the controller 60.

As a specific aspect configuring the controller 60, for example, an electrical circuit can be mentioned as the example, in which the controller 60 includes a receiving unit, a central processing unit (CPU) as a calculation unit, a storage unit in which programs forming the basis of the calculation executed by the calculation unit are stored, a RAM which is an operation region of the calculation, and an output unit which outputs the calculation results.

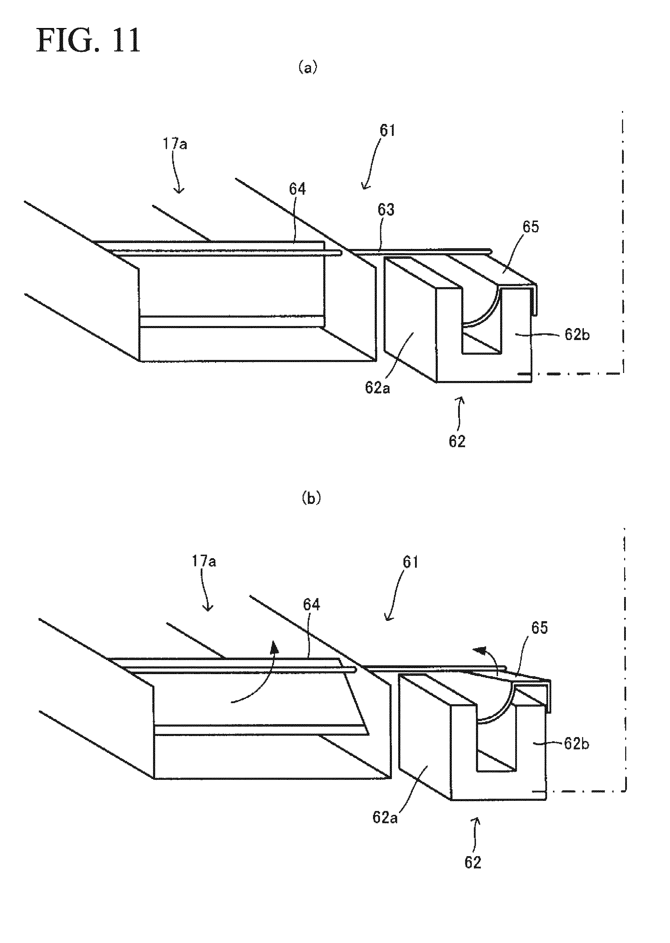

The flow rate detection sensor 61 is a sensor which detects a case where a volume of the water passing the water channel 17 unit time when the water enters the water channel 17 is equal or more than a predetermined volume, for example, a case where the flow speed is increased and the water amount is decreased, a case where the water amount is increased and the flow speed is decreased, or the like, and provides information to the controller 60. In the present aspect, as shown in FIGS. 3 and 4, the flow rate detection sensor 61 is installed inside the water channel 17a. FIG. 11 is a perspective view showing the flow rate detection sensor 61. FIG. 11 (a) shows a state of the flow rate detection sensor 61 when the flow rate inside the water channel 17a is less than a predetermined value, and FIG. 11 (b) shows a state of the flow rate detection sensor 61 when the flow rate inside the water channel 17a is equal to or more than a predetermined value. As understood from FIGS. 11 (a) and 11 (b), the flow rate detection sensor 61 includes an electric proximity switch 62, a shaft 63, a flap 64, and an opening detection plate 65. In addition, the flow rate detection sensor 61 may detect the flow rate of the water flowing into the water collection bucket 19.

The electric proximity switch 62 is a switch in which a portion 62a including a permanent magnet and a portion 62b including a reed switch are provided so as to oppose each other, a magnetic field generated from the portion 62a is applied to the portion 62b, a circuit is closed and connected if the portion 62b is magnetized, and electric signals flows to the circuit. The transmitted signals are sent to the controller 60 via a wire. In the present aspect, the electric proximity switch 62 is installed so as to be adjacent to the water channel 17a. As described below, the electric proximity switch 62 functions as a portion which detects the rotation of the shaft 63 rotated by the flap 64 and converts the rotation into electric signals.

In the present aspect, as described above, the sensor which detects magnetism is used. However, the present invention is not limited to this, and other aspects may be adopted. That is, a device which detects positional changes of the flap 64 and can convert the changes into electric signals may be used, an optical sensor such as a phototube sensor may be used as a non-contact type, and a general micro-switch or the like may be used as a contact type. In addition, an encoder device which directly connects the rotation of the shaft may be used.

The shaft 63 is a shaft member which crosses the water channel 17a and reaches the electric proximity switch 61, and is formed so as to be rotatable about the shaft center.

The flap 64 is a plate-shaped member, the upper end portion of the flap 64 is fixed to the shaft 63, and a plate surface of the flap 64 is disposed in a direction orthogonal to the direction in which the water flows to block the water channel 17a.

The opening detection plate 65 is a member which is disposed to cover the portion 62b including the reed switch in the electric proximity switch 62, and is fixed to the shaft 63. Accordingly, the flap 64 and the opening detection plate 65 are coaxially formed via the shaft 63, and are rotated to be interlocked with each other. Here, the opening detection plate 65 is formed of a ferromagnetic body (a material which is attracted to a magnet).

When the flow rate of the water channel 17a is less than a predetermined value, the above-described components are disposed as shown in FIG. 11 (a). That is, the plate surface of the flap 64 is approximately vertical due to its own weight, and is positioned so as to block the water channel 17a. Meanwhile, the opening detection plate 65 is disposed so as to cover the portion 62b including the reed switch. That is, in this state, since the magnetic force generated from the portion 62a including the permanent magnet does not reach the portion 62b including the reed switch, the circuit is not closed and is not connected, and thus, electric signals are not transmitted.

Meanwhile, when the flow rate of the water channel 17a is equal to or more than a predetermined value, the flap 64 is pushed out by the water, and as shown in FIG. 11 (b), the flap 64 is rotated about the shaft. Accordingly, the opening detection plate 65 is rotated so as to be interlocked with the flap 64 via the shaft 63, the opening detection plate 65 is separated from the portion 62b, and the portion 62b detects the magnetic force generated from the portion 62a.

The inclination angle of the flap 64 is changed according to the flow rate of the water flowing into the water channel 17a. That is, when the flow rate is small, the inclination of the flap 64 is small, and when the flow rate is great, the inclination of the flap 64 is great. Here, since a warning should be issued when the flow rate per unit time is greater than a predetermined flow rate, when the flow rate is less than the predetermined flow rate, it is preferable that signals are not generated from the flow rate detection sensor 61. For example, when the flap 64 is inclined to be equal to or more than a predetermined angle according to the shape of the opening detection plate 65, the circuit may be closed and connected by the reed switch, and the electric signals may be transmitted.

Moreover, when the water flowing into the water channel 17a is less than a predetermined flow rate, the flap 64 returns to the state shown in FIG. 11 (a) and returns to the state in which the electric signals are not transmitted.

According to the present aspect, the example in which the flow rate detection sensor 61 is operated by the rotation of the shaft 63 is described. However, the operation is not necessarily performed by the rotation, and for example, an aspect, in which a sensor is operated by a movement or swing in a predetermined direction, or an ultrasonic measurement, may be adopted. In addition, the present invention is not limited to the case where the flap 64 returns to the initial state by its own weight, and the flap 64 may return to the initial state by an elastic body such as a spring.

According to the flow rate detection sensor 61, it is possible to effectively and simply measure the flow rate of the water which flows into the water collection pit 2a via the water channel 17a and has a free surface. In this case, it is possible to check the flow rate over a long time period with limited power and maintain the operation of the sensor. In addition, since the flow rate detection sensor 61 is operated when the flow rate per unit time is equal to or more than a predetermined value and automatically returns to the initial state by its own weight, the flow rate detection sensor 61 can be installed in a closed environment. Moreover, according to the flow rate detection sensor 61, since the flow rate detection sensor 61 is not operated if the sensor is wetted or immersed into the water and detects only the flow rate in the set direction, it is possible to prevent the sensor from being erroneously operated. In addition, from the viewpoint of the structure of the flow rate detection sensor 61, since the sensor has a simple structure in which the electrical component of the sensor includes only the reed switch, it is possible to decrease reasons for problems or failure as much as possible, and output of a non-voltage contact is performed by the reed switch. Accordingly, unlike a sensor which outputs general pulse signals, the flow rate detection sensor 61 performs the output by ON/OFF, and thus, it is also possible to simplify the circuit configuration.

In the water barrier panel device of the related art, for example, when a warning is issued to notify the surrounding persons about the lifting of the water barrier panel 20 before the water barrier panel 20 is lifted, or the like, it is necessary to detect the flow rate of the water flowing into the water barrier panel device. However, the water flowing into the water barrier panel device forms a stream which flows along a groove and has a free surface. A general flow sensor adopts a type, in which a turbine rotated by the stream is provided, rotation of the turbine outputs a pulse signal by combination of rotation of a magnet and a magnetic sensor, the flow rate is detected by the number of pulses, and thus, the operation is controlled. Accordingly, in order to more stably operate the turbine, a structure in which a pipe is assembled to pass through the inner portion of the sensor is generally used. Therefore, it is difficult to use the sensor to measure the flow rate of the water flowing into the water barrier panel device.

On the other hand, by providing the above-described flow rate detection sensor 61, it is possible to simply measure the volume of the water flowing into the water barrier panel device, and it is possible to appropriately perform the detection when the water barrier panel is lifted.

The outside detection sensor 70 is an obstacle sensor which detects whether or not a detection object exists in a predetermined region. The detection type of the sensor is not particularly limited. Since it is necessary that the outside detection sensor 70 detects whether or not an obstacle exists at the lifted position of the water barrier panel 20 and also detects the stationary state of the object, for example, like in the present aspect, a transmission type photoelectric sensor or a reflection type photoelectric sensor may be used. However, the present invention is not limited to this, and any sensor may be used as long as the outside detection sensor 70 is a sensor which is installed in the vicinity of the water barrier panel and can detect an obstacle, and for example, other types of sensors such as a loop coil type sensor or an active sensor type may be used.

The detection results of the outside detection sensor 70 are sent to the controller 60 as electric signals.

As shown in FIGS. 1(a), 1(b), 3, 4, or the like, the outside detection sensor 70 is disposed at a predetermined position positioned outward farther in the passage than the water barrier panel 20 on one side housing 30, and detects whether or not an obstacle exists in a predetermined region between (in the entire width direction of the passage) the one side housing 30 and the other side housing 30.

Preferably, the predetermined position at which the outside detection sensor 70 is installed is set to detect an assumed obstacle, and accordingly, it is possible to determine a height position of the outside detection sensor 70 from the road surface and the distance thereof from the water barrier panel 20. A vehicle which is temporarily stopped can be mentioned as an example of the assumed object, and in this case, the entire height of the vehicle, the height from the bottom surface, or the like is considered. In addition, for example, a person, a conveyance article, or the like can be mentioned, and an object may be considered which blocks the lifting of the water barrier panel 20 according to a location at which the water barrier panel device 1 is installed. In addition, it is possible to set the position of the outside detection sensor 70 according to the object.

Preferably, the outside detection sensor 70 is disposed in the vicinity of the lifting position of the water barrier panel 20.

In addition, at least one outside detection sensor 70 may be provided, or a plurality of outside detection sensors 70 may be provided according to the height of a detection target.

Similar to the outside detection sensor 70, the inside detection sensor 71 is an obstacle sensor which detects whether or not an object exists. Accordingly, the inside detection sensor 71 may use the sensor similar to the outside detection sensor 70.

As shown in FIGS. 3 and 4, the inside detection sensor 71 is disposed at a predetermined position positioned inward farther in the passage than the water barrier panel 20 on one side wall, and detects whether or not there is an object between (that is, the entire width direction in the passage) the one side wall and the other side wall at the predetermined position.

Similar to the outside detection sensor 70, also in a predetermined position at which the inside detection sensor 71 is installed, it is possible to set the position of the disposition of the inside detection sensor 71 and the number of the inside detection sensors 71.

According to the water barrier panel device, there is an advantage in that the water barrier panel is automatically lifted by the storage of the water in the water collection bucket. However, for example, there is a possibility that the water barrier panel may be lifted even when there is an obstacle immediately on the water barrier panel when the water flows into the water collection bucket. In this case, for example, in a case where the obstacle is a vehicle, if the vehicle is caught by the water barrier panel which has been partially lifted, the vehicle may not be moved.

On the other hand, by providing the object detection sensor, it is possible to temporarily regulate the lifting of the water barrier panel if necessary, and thus, it is possible to solve the problems related to the control of the lifting of the water barrier panel.

The speaker 75 and the rotating lamp 76 function as notification members, and are connected to the controller 60. The speaker 75 issues a warning sound (warning buzzer or voice), and the rotating lamp 76 issues a warning light.

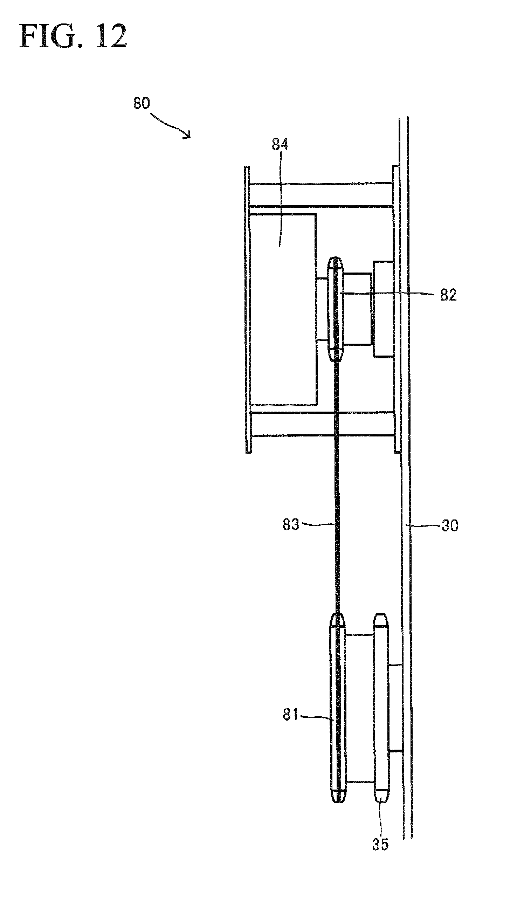

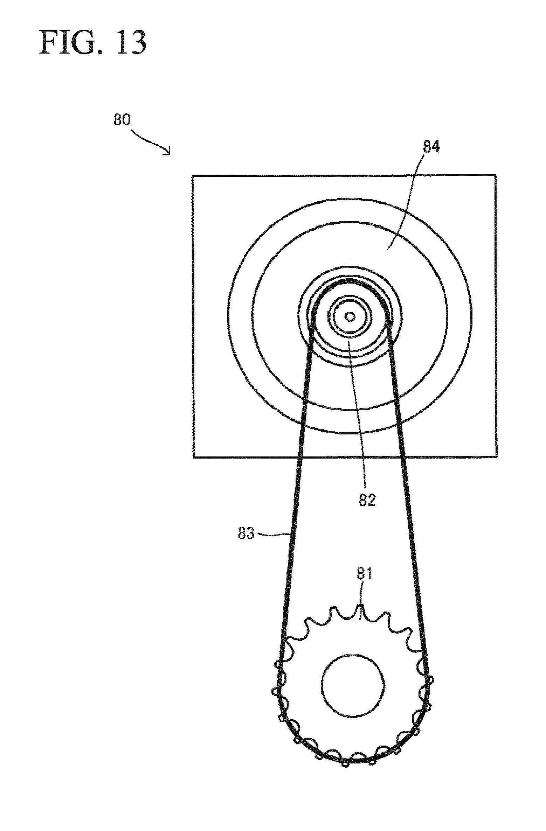

The brake mechanism 80 is connected to the controller 60, and is a regulation device which temporarily regulates starting of the lifting of the water barrier panel 20 which is in a liftable state (that is, a state where the lifting of the water barrier panel 20 is not regulated by the water barrier panel lifting limiting arm 43) based on a command from the controller 60. FIGS. 12 and 13 are views showing the brake mechanism 80. FIG. 12 is a view when a portion including the brake mechanism 80 is viewed from the inner side of the passage in a state where the portion is focused, and FIG. 13 is a view when viewed from the same viewpoint as FIG. 3.

The brake mechanism 80 is configured to include a first brake sprocket 81, a second brake sprocket 82, a brake chain 83, and a brake device 84.

Similar to the first guide sprocket 35, the first brake sprocket 81 is a sprocket gear in which a plurality of teeth is formed on the outer circumference. As understood from FIG. 12, the first brake sprocket 81 is coaxial with the first guide sprocket 35, and is disposed on the side opposite to the housing 30 side (on the center side farther in the passage) from the first guide sprocket 35. The first brake sprocket 81 is configured so as to interlock with the first guide sprocket 35. Accordingly, if any one of the first guide sprocket 35 and the first brake sprocket 81 is rotated, the other is also rotated, and if the rotation of any one of the first guide sprocket 35 and the first brake sprocket 81 is limited, the other is also limited. In FIGS. 3 and 4, the first brake sprocket 81 is omitted so as to explain the first guide sprocket 35.

Similar to the first brake sprocket 81, the second brake sprocket 82 is a sprocket gear in which a plurality of teeth is formed on the outer circumference. The second brake sprocket 82 is disposed above the first brake sprocket 81, and is rotatably attached to a shaft which is provided in the housing 30.

The brake chain 83 is a chain which extends between the first brake sprocket 81 and the second brake sprocket 82 and allows both to interlock with each other. As described above, the plurality of teeth is provided so that the chain meshes with the first brake sprocket 81 and the second brake sprocket 82 on the outer circumferences, and thus, the first brake sprocket 81 and the second brake sprocket 82 can be interlocked with each other.

In the present aspect, the brake device 84 is a brake which regulates the rotation of the second brake sprocket 82, and thus, regulates the lifting of the water barrier panel 20. In the brake device 84, it is required that the time from when the brake device 84 receives brake operation signals until the brake device 84 starts braking is short, and the brake device 84 more rapidly regulates the movement of the water barrier panel. As the brake device 84 of the present aspect, for example, an electromagnetic control type brake may be applied to the mechanism which regulates the rotation of the second brake sprocket 82. Accordingly, the time from when the brake device 84 receives the brake operation signals until the brake device 84 starts the actual braking is short, and the brake device 84 can more rapidly regulate the movement of the water barrier panel 20. Needless to say, the brake applied to the brake mechanism does not necessarily adopt the electromagnetic control type, and other known brake mechanisms may be used.

According to the brake mechanism 80, the brake device 84 is operated based on a command from the controller 60, and thus, regulates the rotation of the second brake sprocket 82. Since the second brake sprocket 82 interlocks with the first brake sprocket 81 via the brake chain 83, the rotation of the first brake sprocket 81 is regulated. In addition, since the first brake sprocket 81 interlocks with the first guide sprocket 35 so as to be coaxial with each other, the rotation of the first guide sprocket 35 is regulated, and as a result, the water barrier panel 20 is not lifted.

Here, as one aspect, the example is disclosed, in which the mechanism (brake device 84) regulating the rotation of the first guide sprocket 35 is separately provided in the first guide sprocket 35, and the mechanism is operated via the first brake sprocket 81, the second brake sprocket 82, and the brake chain 83. This aspect is particularly advantageous in a case where the brake mechanism 80 is provided on an existing water barrier panel device after the water barrier panel device has been installed. Accordingly, in a case where the brake mechanism 80 is initially provided on a new water barrier panel device, the brake device 84 may be directly connected to the first guide sprocket 35 so as to be coaxial with each other. Therefore, it is possible to reduce the number of parts.

Moreover, in the present aspect, the first guide sprocket 35 is an object to be braked. However, the present invention is not limited to this, the second guide sprocket 36 or other members may be the object to be braked.

In addition, as understood from FIG. 4, in the present aspect, the brake mechanism 80 is disposed above the position at which the water barrier panel 20 is lifted the most. Accordingly, it is possible to prevent the brake mechanism 80 from being wetted by the water.

Next, an operation of the water barrier panel device 1 configured as described above will be described. As shown in FIG. 3, under normal conditions, the water barrier panel device 1 is installed so that the water collection bucket 19 is disposed on the upper portion of the water collection pit 2a, and the entire water barrier panel main body 20a of the water barrier panel 20 is accommodated in the water barrier panel accommodating pit 2b. That is, since the weight between the water collection bucket 19 and the water barrier panel 20 is balanced via the transmission mechanism 31 and thus, the operations are determined, in order to maintain the state shown in FIG. 3 under the normal conditions, as described above, the weight of the water barrier panel 20 is set to be heavier than the total weight of the water collection bucket 19 (including counterweight 19b), the connection bracket 37, and the movement sprocket 38. In the state shown in FIG. 3, since the passage is open, passage of a person or a vehicle is not prohibited. Moreover, since the grating 16b and the cover members 28 and 20b are configured so as to be the road surface without steps, the comfortableness of the passage is increased.

If the water level is increased by an increase in the water due to rain fall, the water level in the water intake groove main body 16a is changed. Here, under normal conditions, or in a case where the water level is raised by the increase of the water due to rainfall or the like, when the water level in the water intake groove main body 16a is lower than the road surface and is lower than the height position of the water introducing member 17, the water flowing into the water intake groove main body 16a via the grating 16b from the road surface is discharged to drain water processing equipment such as a drain pipe from a drain port (not shown). That is, in this case, since the water is not stored in the water collection bucket 19 and the weight of the water collection bucket 19 is not changed, the water collection bucket 19 does not move downward. Accordingly, it is possible to maintain the state shown in FIG. 3. In addition, in this case, when the flow rate of the water channel 17a is less than a predetermined value, the flap 64 of the flow rate detection sensor 61 is not rotated, notification is not performed, and the brake mechanism 80 is not operated.

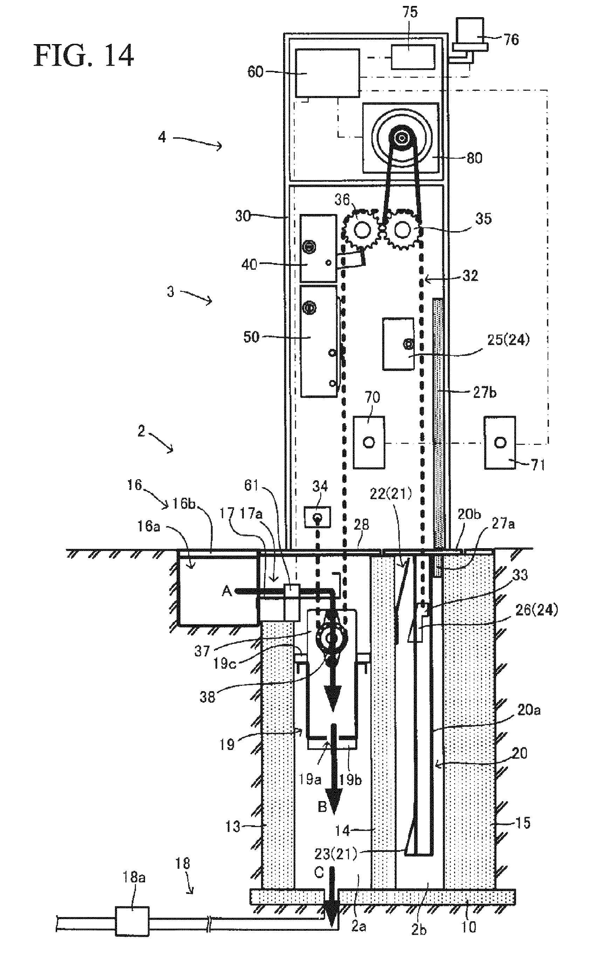

When the water level is increased from the above-described water level, the water level in the water intake groove main body 16a is also changed. Here, when the water level is higher than the height position of the water introducing member 17 by the increase of the water level, the water flowing into the water intake groove main body 16a through the grating 16b from the road surface flows to the water introducing member 17 as shown by an arrow A in FIG. 14, moves in the water channel 17a, and flows into the water collection bucket 19.

However, in a case where an inflow amount of the water is small and is not an amount which can lift the water barrier panel 20, that is, as described above, when the flow rate is less than or equal to a predetermined value, the entire amount of the water flowing into the water collection bucket 19 flows out from the opening 19a, and thus, the water does not stay in the water collection bucket 19. Moreover, the water flowing out from the opening 19a of the water collection bucket 19 is drained by the water drain portion 18 as shown by an arrow C. Accordingly, the water barrier panel 20 is not lifted, and the state of the water barrier panel 20 similar to the state under the normal conditions is maintained.

In addition, in this case, even when the flap 64 of the flow rate detection sensor 61 is rotated by the flowing water, the inclination of the flap 64 is small since the flow rate is small, and thus, the flap 64 is not rotated until the rotation is detected by the reed switch 62b, and signals are not generated. Accordingly, the safety device portion 4 is not operated.

Meanwhile, if water flows into the water collection bucket 19 with a high flow rate by an increase in the water due to a flood or the like, the amount of the water flowing into the water collection bucket 19 is larger than the amount of the water drained by the opening 19a, and thus, the water is stored in the water collection bucket 19.

Here, as described above, the weight between the water collection bucket 19 and the water barrier panel 20 is balanced via the transmission mechanism 31 and thus, the operations are determined. However, as described above, when the water equal to or more than a predetermined amount is stored in the water collection bucket 19, the sum of the weight of the water collection bucket 19, the connection bracket 37, and the movement sprocket 38, and the weight of the stored water is set so as to be heavier than the weight of the water barrier panel 20. Accordingly, as described above, if the water which flows into the water collection bucket 19 so as to be stored reaches a predetermined weight, the weight of the water exceeds the weight of the water barrier panel 20, and thus, the water collection bucket 19 is lowered into the water collection pit 2a. If so, the movement sprocket 38 is lowered approximately vertically via the connection bracket 37 while being rotated along with the water collection bucket 19 by a lowering force of the water collection bucket 19.

The movement sprocket 38 is rotated in a clockwise direction from the viewpoint of FIG. 3 by the lowering, the first guide sprocket 35 and the second guide sprocket 36 are rotated in a counterclockwise direction, the portion of the lifting chain 32 existing between the fixing member 34 and the second guide sprocket 36 is lengthened, and the lifting chain moves downward.

In this way, since the lifting chain 32 is lowered, the end portion of the lifting chain 32 attached to the water barrier panel 20 is lifted, the water barrier panel 20 is lifted according to the lifting of the end portion, and as shown in FIG. 4, the water barrier panel 20 rises into the passage. As a result, entering of the water into the passage is blocked by the water barrier panel 20.

According to the transmission mechanism 31, since the transmission mechanism 31 is configured of the lifting chain 32 and the sprockets 35, 36, and 38, the lifting chain 32 can be moved and lifted in the state where the lifting chain 32 engages with the sprockets 35, 36, and 38, and wear or slipping between the lifting chain 32 and the sprockets 35, 36, and 38 generated by the transmission of the lifting force applied to the water barrier panel 20 is prevented.

As described above, when the basic operation in which the water barrier panel 20 is lifted is performed, the second guide sprocket 36 is rotated in a counterclockwise direction from the viewpoint of FIG. 3. This is the rotation in the direction shown by VIIId in FIG. 8(b). The water barrier panel control mechanism 40 reaches the state shown in FIG. 8(b) by the rotation, and thus, the water barrier panel 20 is lifted without being hindered.

In addition, when the water barrier panel 20 is lifted, as shown in FIG. 4, the first pushing member 21 and the second pushing member 24 moves the water barrier panel 20 to the inner of the passage and presses the water barrier panel 20 against the seal members 27a, 27b, and 27c disposed on the inner side of the passage, and it is possible to secure high cut-off performance. In the present aspect, the first pushing member 21 and the second pushing member 24 simultaneously press the water barrier panel 20 at the upper portion and the lower portion of the water barrier panel, and thus, it is possible to obtain higher cut-off performance.

Meanwhile, for example, such as a case where the water exceeding the amount of the assumed rain water flows in the water collection pit 2a, or the like, a case where the water enters the water collection pit 2a and the water collection pit 2a is flooded after the barrel panel 20 is lifted or during the lifting is considered. In this case, when the water collection bucket 19 is lowered to the position at which the water collection pit 2a is filled with the water, the lowering of the water collection bucket 19 is resisted by buoyancy of the water collection bucket 19. As a result, as described above, since the weight of the water barrier panel 20 is set so as to be heavier than the weight of the water collection bucket 19, the water barrier panel 20 is lowered.

In this way, when the water barrier panel 20 is lowered, the second guide sprocket 36 is rotated in a clockwise direction from the viewpoint of FIG. 3. However, if the water barrier panel control mechanism 40 is in the first state of FIG. 8(b), the rotation in the clockwise direction shown by VIIIf in FIG. 8(b) is limited. Accordingly, it is possible to prevent the water barrier panel 20 which has been lifted once from being lowered below the lifted position. Accordingly, after the water barrier panel 20 is lifted, it is possible to prevent the water barrier panel 20 from being lowered unintentionally. That is, it is possible to increase reliability of the operation of the water barrier panel 20. In addition, in this case, since the pressing forces generated by the first pushing member 21 and the second pushing member 24 are also maintained, it is possible to maintain high cut-off performance.

Moreover, when the water barrier panel 20 is lifted, the water barrier panel speed-reduction mechanism 50 is in the state shown in FIG. 10(a), and thus, the lifting speed of the water barrel panel 20 is decreased by the operation of the speed-reduction sprocket 52. Accordingly, rapid lifting of the water barrier panel 20 is prevented, and it is possible to prevent unexpected conditions.

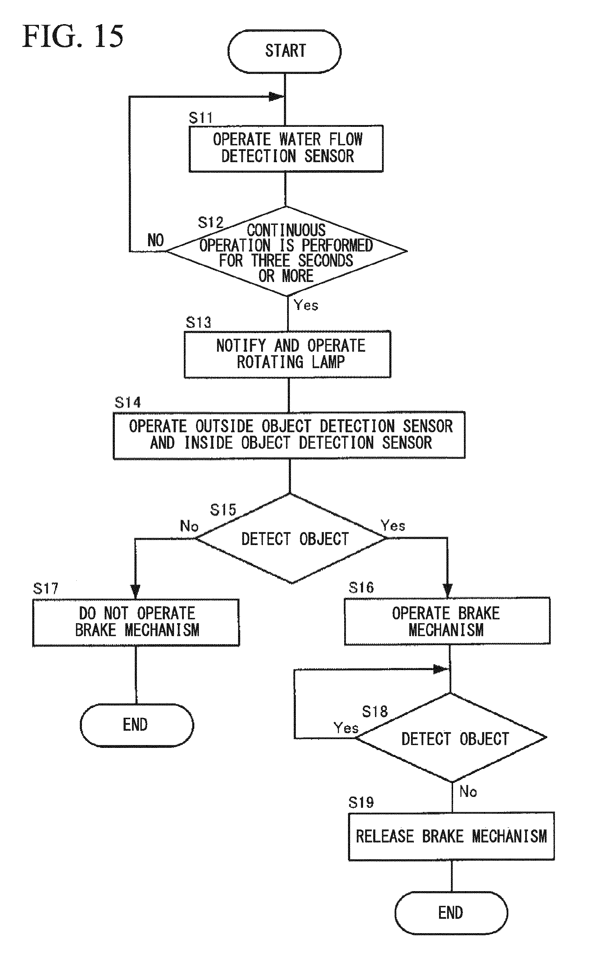

In addition, in this case, the safety device portion 4 is operated as follows. FIG. 15 shows a flow of the operation. A program which operates the safety device portion 4 in this way is stored in the controller 60, and the safety device portion 4 is controlled by performing the program if necessary.

The water flows into the water channel 17a, and thus, the flap 64 of the flow rate detection sensor 61 is rotated by the flowing water, the opening detection plate 65 is also rotated according to the rotation of the flap, and the reed switch detects the magnetic force of the permanent magnet, the circuit is closed and connected, and the signals are transmitted (the flow rate detection sensor is operated, Step S11).

When the controller 60 receives the signals from the operated flow rate detection sensor 61, for example, when the controller 60 receives the signals from the flow rate detection sensor 61 during a predetermined time or the more (for example, during three seconds), the controller determines that the issue of a warning should be instructed (the flow rate detection sensor is continuously operated during three seconds or more, Step S12). Accordingly, erroneous notification is decreased, and it is possible to operate the safety device portion 4. If No in Step S12, the controller continuously receives the signals from the flow rate detection sensor 61.

Meanwhile, if Yes in Step S12, for example, command signals are transmitted from the controller 60, and notification using the warning buzzer by the speaker 75 or notification using voice, and notification using light of the rotating lamp 76 are performed (notify and operate rotating lamp, Step S13).

Continuously, the outside detection sensor 70 and the inside detection sensor 71 are operated (operate outside detection sensor and inside detection sensor, Step S14). Accordingly, the detection of the object starts. In this way, since the outside detection sensor 70 and the inside detection sensor 71 are operated after the flow rate detection sensor 61 is operated, it is possible to use power only when the power is necessary, and it is possible to reduce energy consumption.

The detection of the object is determined by the controller 60 based on signals from the outside detection sensor 70 and the inside detection sensor 71 (detect the object, Step S15). Here, if signals indicating the existence of an object are generated from at least one of the outside detection sensor 70 and the inside detection sensor 71, it is determined that an object is detected.

If Yes in Step S15, the command signals are transmitted from the controller 60, the brake mechanism 80 is operated, and as described above, the lifting of the water barrier panel 20 is regulated (operate brake mechanism, Step S16).

Meanwhile, if No in Step S15, the command signals are not particularly transmitted from the controller 60, and the brake mechanism is not operated (do not operate brake mechanism, Step S17).

Accordingly, for example, even in the case where a vehicle is temporarily stopped immediately on the water barrier panel when water flows into the water collection bucket, the lifting start of the water barrier panel 20 is regulated, problems are avoided, in which the vehicle is caught by the water barrier panel, the vehicle cannot be moved, the water barrier panel cannot be further lifted, and both the vehicle and the water barrier panel device cannot function.

After Step S16, the detections are continuously performed by the outside detection sensor 70 and the inside detection sensor 71, and it is determined whether or not an object exists (detect object, Step S18). Here, if the detection with respect to the object continues and Yes is selected, Step 18 is repeated in the state where the brake mechanism is operated. Meanwhile, for example, after the detected object moves and the object is not detected, the brake mechanism is released (release brake mechanism, Step S19), and the water barrier panel 20 is lifted. Accordingly, the water barrier panel 20 is not lifted after the detected object passes through the upper portion of the water barrier panel 20, and the inflow of the water is prevented. In addition, when the lifting of the water barrier panel 20 is unintentionally regulated for any reason, braking of the brake mechanism 80 is released by operating a recovery mechanism (not shown) or the like, and the water barrier panel 20 is quickly lifted.

In this way, the water barrier panel 20 is prevented from being abruptly lifted when the lifting of the water barrier panel 20 starts.

Moreover, the regulation with respect to the lifting of the water barrier panel 20 is not necessarily limited to the case before the lifting of the water barrier panel 20 starts, and the regulation may be similarly performed even when the water barrier panel 20 is slightly lifted. Accordingly, it is possible to further increase convenience with respect to the passage.

Meanwhile, in the state shown in FIG. 3, when the water barrier panel control mechanism 40 is in the state shown in FIG. 8(a), the rotation in the direction of VIIIc of the second guide sprocket 36 via the control sprocket 41 is limited. The rotation direction is such that the water barrier panel 20 is lifted. Accordingly, by setting the water barrier panel control mechanism 40 to be in the state shown in FIG. 8(a), it is possible to prevent the lifting of the water barrier panel 20 intentionally. This case is effective when a user wants to prevent the lifting of the water barrier panel 20 according to conditions of the user.

After the water barrier panel 20 is lifted, for example, when rain stops, the water is drawn, and the flow rate of the water flowing into the water channel 17a is less than a predetermined value, the water in the water collection bucket 19 and the water collection pit 2a is drained by the opening 19a and the water drain portion 18, and a force to return to the state of FIG. 3 is operated. However, when the water barrier panel control mechanism 40 is in the state of FIG. 8(b), the lowering of the water barrier panel 20 is prevented. On the other hand, by setting the water barrier panel control mechanism 40 to the state shown in FIG. 8(a), the lowering of the water barrier panel 20 is permitted, and thus, it is possible to lower the water barrier panel 20. In this case, by setting the water barrier panel speed-reduction mechanism 50 to the state of FIG. 10(b) and separating the speed-reduction sprocket 52 from the lifting chain 32, the resistance to the lifting chain 32 is decreased, and thus, it is possible to lower the water barrier panel 20.

### DESCRIPTION OF THE REFERENCE SYMBOLS

- 1:: water barrier panel device
- 2:: passage opening and closing portion
- 3:: mechanism accommodating portion
- 4:: safety device portion
- 10:: bottom plate
- 11 to 15:: partition member
- 16:: water intake groove
- 17:: water introducing member
- 18:: water drain portion
- 19:: water collection bucket
- 20:: water barrier panel
- 21:: first pushing member
- 24:: second pushing member
- 27a to 27c:: seal member
- 28:: cover member
- 30:: housing
- 31:: transmission mechanism
- 32:: lifting chain
- 35:: first guide sprocket
- 36:: second guide sprocket
- 37:: connection bracket
- 38:: movement sprocket
- 40:: water barrier panel control mechanism
- 50:: water barrier panel speed-reduction mechanism
- 61:: flow rate detection sensor
- 70:: outside detection sensor
- 71:: inside detection sensor
- 80:: brake mechanism (regulation device)
- 81:: first brake sprocket
- 82:: second brake sprocket
- 83:: brake chain
- 84:: brake device

## Claims

1. A water barrier panel device, comprising:
a water barrier panel which blocks passage of water;
a water collection pit which is configured to permit inflow of water;
a water collection bucket which is moved in a vertical direction based on an amount of accumulated water;
an interlocking mechanism which interlocks the water barrier panel and the water collection bucket; and
a control member which controls movement of the water barrier panel.

2. The water barrier panel device according to claim 1,
wherein the control member comprises an opening which is provided in the water collection bucket.

3. The water barrier panel device according to claim 1 or 2,
wherein the control member comprises a plurality of openings which are provided in the water collection bucket, and the openings are disposed so as to be separated from each other.

4. The water barrier panel device according to claim 1,
wherein the control member comprises:
a seal member which comes into contact with at least a portion of the water barrier panel at a position at which the water barrier panel is lifted;
a pressing member; and
a receiving member corresponding to the pressing member,
wherein an inclined surface which is inclined in a movement direction of the water barrier panel is provided in at least one of the pressing member and the receiving member, and
wherein the inclined surface moves the water barrier panel in a direction intersecting the movement direction to press the water barrier panel against the seal member.

5. The water barrier panel device according to claim 4,
wherein a driven roller is provided at a position corresponding to the inclined surface of the pressing member and the receiving member, and the driven roller comes into contact with the inclined surface.

6. The water barrier panel device according to claim 1, further comprising:
a water intake groove, and a water introducing member which drains water when a water level of the water intake groove is lower than a predetermined level,
wherein the water introducing member introduces the water from the water intake groove to the water collection pit when the water level of the water intake groove is equal to or more than a predetermined level.

7. The water barrier panel device according to claim 6, further comprising:
a drain member which drains water stored in the water collection pit.

8. The water barrier panel device according to claim 6,
wherein the control member comprises a water flow sensor which measures an amount of water flowing into the water collection pit,
wherein the flow sensor comprises:
a flap which is disposed in the water introducing member and is movable according to a flow rate of the water introducing member; and
a detection member which detects the position of the flap.

9. The water barrier panel device according to claim 8,
wherein the control member comprises a notification portion which notifies lifting of the water barrier panel based on a detection result of the water flow sensor.

10. The water barrier panel device according to claim 1,
wherein the control member comprises an obstacle sensor which detects whether or not there is an obstacle with respect to the movement of the water barrier panel, and regulates the movement of the water barrier panel based on a detection result of the obstacle sensor.

11. The water barrier panel device according to claim 10,
wherein when the obstacle is no longer detected after the obstacle sensor detects the obstacle, the control member releases movement regulation of the water barrier panel.

12. The water barrier panel device according to claim 10,
wherein the obstacle sensor comprises an outside detection sensor which is provided on the exterior side of the water barrier panel, and an inside detection sensor which is provided on the interior side of the water barrier panel, and
wherein the control member determines that there is an obstacle when at least one of the outside detection sensor and the inside detection sensor detects an object.

13. The water barrier panel device according to claim 10,
wherein the control member comprises a water flow sensor which measures an amount of water which flows into the water collection pit,
wherein the control member operates the obstacle sensor based on detection information of the water flow sensor, and controls the barrier panel by a detection signal of the obstacle sensor.

14. The water barrier panel device according to claim 1,
wherein the control member comprises a water barrier panel speed-reduction mechanism which regulates a lifting speed of the water barrier panel.

15. The water barrier panel device according to claim 1, further comprising:
a chain which connects the water barrier panel and the water collection bucket; and a speed-reduction sprocket which engages with the chain and is rotated,
wherein the chain is switchable to engagement with and detachment from the speed-reduction sprocket.
